Europäisches Patentamt

European Patent Office

Office européen des brevets

(19)

(11) **EP 1 450 496 A1**

(12) **EUROPEAN PATENT APPLICATION**
published in accordance with Art. 158(3) EPC

(43) Date of publication:
    **25.08.2004 Bulletin 2004/35**

(51) Int Cl.⁷: **H04B 1/707**, H04Q 7/38

(21) Application number: **02783597.4**

(86) International application number:
    **PCT/JP2002/012208**

(22) Date of filing: **21.11.2002**

(87) International publication number:
    **WO 2003/044976 (30.05.2003 Gazette 2003/22)**

(84) Designated Contracting States:
    **DE FR GB IT**

(30) Priority: **21.11.2001  JP 2001356678**

(71) Applicant: **NEC Corporation**
    **Minato-ku, Tokyo 108-8001 (JP)**

(72) Inventor: **HIRADE, Sei, c/o NEC Corporation**
    **Tokyo 108-8001 (JP)**

(74) Representative: **Betten & Resch**
    **Patentanwälte,**
    **Theatinerstrasse 8**
    **80333 München (DE)**

(54) **CDMA RECEPTION APPARATUS AND BASE STATION THEREOF**

(57)     A CDMA reception apparatus (10) for receiving a signal of the CDMA method and capable of uniformly improving reception characteristic in various propagation environments including a city region and a suburb region. The CDMA reception apparatus (10) receiving a signal of the CDMA method as a reception signal (a) includes reception timing detecting means (12) for detecting a reception timing (b) despreading the reception signal and detecting means (11) for performing detection by despreading the reception signal according to the reception timing detected by the reception timing detecting means. The reception timing detecting means (12) has a same path deletion unit (35) which invalidates in each protection path a particular protection path forming a side lobe of another protection path according to a path timing (i) and a path level (k) of each of the paths currently present and extracts paths other than the invalid paths as valid paths. The reception timing of each of the valid paths is output as the reception timing (b) despreading the reception signal for the detecting means.

PATH LEVEL OF finger 3 ≧ THRESHOLD
finger 1 AND finger 3 ARE DETERMINED TO BE DIFFERENT PATHS

PATH LEVEL OF finger 4 < THRESHOLD
finger 2 AND figer 4 ARE DETERMINED TO BE THE SAME PATHS

FIG. 5

# Description

Technical Field

The present invention relates to same-path determination in code division multiple access (CDMA) communication and, more particularly, to a CDMA reception apparatus that improves a reception characteristic, a base station therefor, and a method for detecting reception timings for despreading reception signals thereof.

Background Art

As a cellular mobile wireless communication system, many types of multiple access system have conventionally been proposed and have been adopted in the world. Among the systems, a recent trend is directed to a cellular mobile wireless code division multiple access (CDMA) system, which has specific spreading codes assigned to respective channels and which is simply called a CDMA system. In such a CDMA system, modulated waves having the same carrier frequency spread by each specific spreading code are transmitted as radio signals from a transmitting end to a receiving end. In response to the radio signals, a CDMA reception apparatus at the receiving end performs a synchronous operation using each specific spreading code to identify a desired channel. In order to distinguish between channels, different spreading codes are used to identify radio channels between a base station and a mobile station.

Additionally, it is to be noted that radio signals are received through a plurality of channels, i.e., multiple channels, in the CDMA system and thus the CDMA reception apparatus must eliminate multiple-channel fading from the radio signals by accurately detecting given signals, such as synchronization signals and/or pilot signals.

In addition, in a cellular mobile radio communication system, it must be considered that each mobile station is moved from one radio service area, i.e., a cell, to another while maintaining communication with a base station. In this case, the base station must be switched from one to another without interruption of communication with each mobile station.

In view of the foregoing situations, a CDMA reception apparatus used for a mobile station has a rake receiver to which radio signals are supplied through multiple channels and a searcher section for searching for such multiple channels to thereby establish chip synchronization. In other words, the searcher section is used to detect optimum reception timings from radio signals and to notify the rake receiver of the optimum reception timings. This is also applied to a CDMA reception apparatus for use at each base station. Thus, a CDMA reception apparatus at a base station will mainly be described hereinafter.

In practice, reception signals which are subjected to high-frequency amplification and frequency conversion performed by a high-frequency amplifier and a frequency converter, respectively, are supplied to both the rake receiver and the searcher section. In this case, the rake receive has a finger section having a plurality of finger circuits. The finger circuits operate in response to the reception signals received through multiple channels and demodulate the reception signals by using spreading codes, to thereby provide demodulated signals. To this end, a correlation value between a spreading code for a desired channel and each reception multiple-channel signal is calculated and a code is received at each reception timing through a corresponding channel. Thereafter, maximum-values are combined to increase the strength of the reception signals. Such a maximum-ratio combining is effective to reduce the influence of multiple-channel fading and to improve a signal-to-noise (S/N) ratio.

On the other hand, the searcher section operates in response to reception signals and delay spreading codes and has a plurality of correlators (a correlator group) for calculating correlations between reception signals and delay spreading codes and a plurality of adders (an adder group) for outputting correlation values summed up by addition of the respective correlation values. Additionally, the total correlation values are sent to a valid-path determination circuit (a path control section), where valid paths (high-level reception timings) are determined (searched for) and reception timing signals representing valid paths, i.e., optimum reception timings, are supplied to the finger section of the rake receiver. It is to be noted that the correlators and the adders correspond to each other on a one to one basis. In any case, the search section has a correlator group, an adder group, and a path control section.

Japanese Unexampled Patent Publication No. 2001-186056 discloses one example (a related art) of a system for detecting multipaths. In the related art, in order to detect multipaths from each base station (i.e., to determine reception timings, multipaths are sequentially searched for in the vicinity of a dominant wave that exists in a multipath detection range. Then, when a specified number of multipaths having predetermined reception qualities or higher are found, the multipath-detection being executed is finished. This proposes a system for effectively detecting multipaths at a high speed even in a situation in which a multipath environment varies in a short period of time.

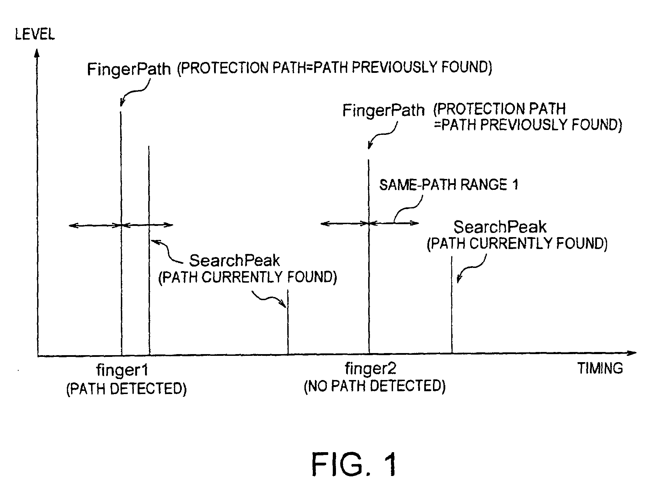

Fig. 1 is a graph for describing one example of a same-path determination method for a conventional path control section. In Fig. 1, the horizontal axis indicates timing and the vertical axis indicates a level. In Fig. 1, finger paths indicate protection paths (i.e., previously found paths), which are results of the previous protection processing, and search peaks indicate paths currently found.

As shown in Fig. 1, in the conventional same-path determination method, a determination is made as follows as to whether or not a path is the same. Here, the paths currently found are called search path timings g and the results of the previous protection processing are called protection path timings i. First, timing differences between each search path timing g and the protection path timings i are determined. Then, based on the timing differences, a determination is made as to whether or not a search path timing g exists in the range of "protection path timing i ± a same-path range 1". When the search path timing g exists, it is determined that the path in question is the same, and when no search path timing g exists, it is determined that the path in question is a different path.

For example, with respect to a finger 1 shown in Fig. 1, a path currently found exists in the "the finger 1 ± the same-path range 1". Thus, for the finger 1, it is determined that the same path as the previously found path is found, i.e., "a path is detected".

In contrast, with respect to a finger 2 shown in Fig. 1, a path currently found does not exist in "the finger 2 ± the same-path range 1". Thus, for the finger 2, it is determined that the same path as the previously found path is not found, i.e., "a path is not detected".

As described above, the conventional same-path determination method has the following problems.

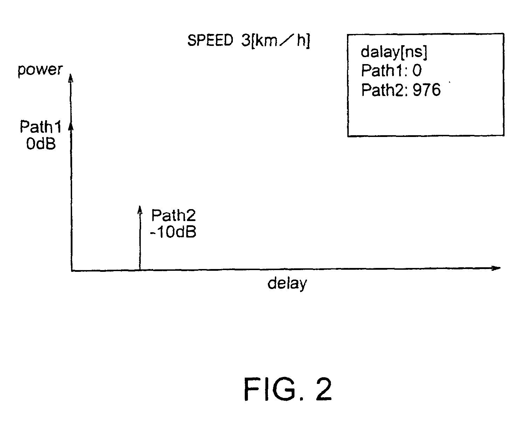

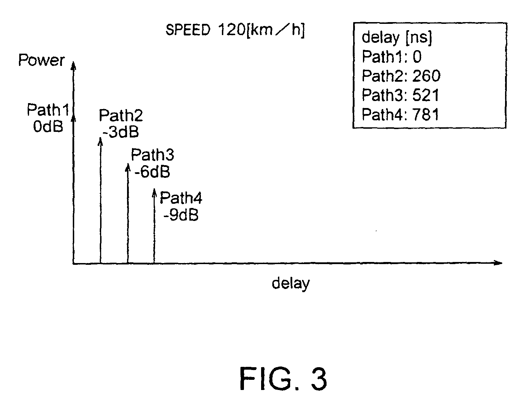

Figs. 2 and 3 show examples of a propagation model. In Figs. 2 and 3, the horizontal axes indicate delays and the vertical axes indicate powers. Fig. 2 shows a model in which the movement speed of an MS (a mobile station or mobile terminal) is 3 [km/h] and a path having a power of -10 dB exists at a distance of 0.976 [μs]. In contrast, Fig. 3 shows a model in which the movement speed of the MS is fast, i.e., 120 [km/h], and paths having powers of - 3, -6, and -9 dB exist side by side at an interval of 0.260 [μs].

Fig. 2 shows a case in which individual paths are far apart from each other in a low-speed fading environment, which is often found in suburban areas. Fig. 3 shows a case in which individual paths are close to each in a high-speed fading environment, which is often found in urban areas.

In the conventional same-path determination method, now suppose that the above-described "same-path range 1" used in protection processing is set to be small. In this case, as shown in Fig. 3, when the individual paths are close to each other, the characteristic improves because of the ease of separation of the paths. However, as shown in Fig. 2, when individual paths are far apart from each other, sidelobes are easily received and are also used for rake combining, thereby deteriorating the characteristic.

In contrast, suppose the above-described "same-path range 1" used in protection processing is set to be large. In this case, as shown in Fig. 2, when the individual paths are far apart from each other, the characteristic improves because of difficulty of receiving sidelobes. However, as shown in Fig. 3, when the individual paths are close to each other, a path that can be a different path even with a small fluctuation is determined to be the same path, thereby deteriorating the characteristic.

In this manner, the conventional same-path determination method cannot equally improve the reception characteristic with respect to various propagation environments. The reason is that the conventional same-path determination method employs a system for determining whether or not paths are the same by using only path timings as shown in Fig. 1.

Accordingly, an object of the present invention is to overcome the problems of the related art and to provide a CDMA reception apparatus capable of equally improving a reception characteristic with respect to various propagation environments, a base station for the CDMA reception apparatus, and a method for detecting reception timings for despreading the reception signals thereof.

Disclosure of Invention

To achieve the foregoing object, a first aspect of the present invention provides a CDMA receiving apparatus for receiving CDMA-system signals as reception signals. The CDMA reception apparatus is characterized by including reception-timing detecting means for detecting reception timings for despreading the reception signals, and detection processing means for performing detection processing by despreading the reception signals in accordance with the reception timings detected by the reception-timing detecting section. The reception-timing detecting means includes a same-path deletion processing section. Based on information of path timings and path levels of protection paths that are paths existing at present time, the same-path deletion processing section designates specific protection paths, each forming a sidelobe of another protection path of the protection paths, as invalid paths and extracts protection paths other than the invalid paths as valid paths. The same-path deletion processing section outputs the reception timings of the valid paths to the detection processing means as the reception timings for despreading the reception signals.

In the CDMA reception apparatus according to the first aspect of the present invention, in the processing for detecting the invalid paths each forming a sidelobe of another protection path of the protection paths, the same-path deletion processing section may sequentially detect the specific protection paths as the invalid paths from the protection paths. Each specific protection path has a path timing in a predetermined range from the path timing of the another protection path and has a path level that is lower than a threshold specified based on the path level of the another protection path.

In the CDMA reception apparatus according to the first aspect of the present invention, in the processing for detecting the invalid paths each forming a sidelobe of another protection path of the protection paths, the same-path deletion processing section may extract each invalid path in accordance with information of the path timing and the path level of each protection path and information of correlation values of each protection path. In this case, in the processing for detecting the invalid paths each forming a sidelobe of another protection path of the protection paths, the same-path deletion processing section sequentially detects the specific protection paths as the invalid paths from the protection paths. For example, the specific protection paths include protection paths, each having a path timing in a predetermined range from the path timing of the another protection path and having a path level that is lower than a threshold specified based on the path level of the another protection path, and protection paths, each having a path timing in a predetermined range from the path timing of the another protection path, having a path level that is higher than a threshold specified based on the path level of the another protection path, and having a smaller difference between an angle defined by vector rotations of correlation values and an angle defined by vector rotations of correlation values of the another protection path than a specified value.

In the CDMA reception apparatus according to the first aspect of the present invention, preferably, the threshold specified based on the path level of the another protection path is a value obtained by multiplying the value of the path level of the another protection path by a positive coefficient of 1.0 or less.

In the CDMA reception apparatus according to the first aspect of the present invention, desirably, the reception-timing detecting means includes a protection processing memory section for recording information of the protection paths, means for sequentially executing processing for detecting paths from the reception signals, and a protection processing section for re-determining the protection paths that are paths existing at present time in accordance with information of the respective paths detected by the path detection processing and information of the respective protection paths recorded in the protection processing memory section. Desirably, the same-path deletion processing section may extract the valid paths from the protection paths re-determined by the protection processing section.

A second aspect of the present invention provides a CDMA reception apparatus for receiving CDMA-system signals as reception signals. The CDMA reception apparatus is characterized by including reception-timing detecting means for detecting reception timings for despreading the reception signals, and detection processing means for performing detection processing by despreading the reception signals in accordance with the reception timings detected by the reception-timing detecting section. The reception-timing detecting means includes a protection processing memory section for recording information of protection paths that are paths existing at present time, and a peak detection processing section for sequentially detecting peak timings from the reception signals, the peak timings being timings indicating peaks of the levels of the reception signals. The reception-timing detecting means further includes means for detecting, as paths for the reception signals, peak timings having levels that are equal to or higher than a specified value from the peak timings detected by the peak detection processing section, and a protection processing section for re-determining the protection paths in accordance with information of the detected paths and information of the respective protection paths recorded in the protection processing memory section and for outputting the reception timings of the determined protection paths to the detection processing means as the reception timings for despreading the reception signals. The peak detection processing section outputs, of the peak timings detected from the reception signals, peak timings other than peak timings each forming a sidelobe of another peak timing.

In the CDMA reception apparatus according to the second aspect of the present invention, in the processing for detecting the peak timings, preferably, the peak detection processing section detects, of the peak timings detected from the reception timings, the peak timings in a first detection range, which is a specified range in the vicinity of another peak timing having a higher level and excludes the detected peak timings. The peak detection processing section further detects the peak timings that are in a second detection range, which is a specified range in the vicinity of another peak timing a having higher level, and that have levels lower than a threshold specified based on the level of the another peak timing and excludes the detected peak timings. The peak detection processing section then outputs the peak timings other than the excluded peak timings. In this case, desirably, the threshold specified based on the level of the another peak timing is a value obtained by multiplying the value of the level of the another peak timing by a positive coefficient of 1.0 or less.

A third aspect of the present invention provides a method for, in a CDMA reception apparatus for receiving CDMA-system signals as reception signals, detecting reception timings for despreading the reception signals. The method is characterized by including a same-path deletion processing step of detecting, in accordance with information of path timings and path levels of protection paths that are paths existing at present time, specific protection paths each forming a sidelobe of another protection path of the protection paths as invalid paths, extracting the protection paths other than the invalid paths as valid paths, and detecting the reception timings of the valid paths as the reception timings for despreading the reception signals.

In the method for detecting the reception timings according to the third aspect of the present invention, in the processing for detecting the invalid paths each forming a sidelobe of another protection path of the protection paths in the same-path deletion processing step, the specific protection paths may be sequentially detected as the invalid paths from the protection paths. Each specific protection path has a path timing in a predetermined range from the path timing of the another protection path and has a path level that is lower than a threshold specified based on the path level of the another protection path.

In the method for detecting the reception timings according to the third aspect of the present invention, in the processing for detecting the invalid paths each forming a sidelobe of another protection path of the protection paths in the same-path deletion processing step, each invalid path may be extracted in accordance with information of the path timing and the path level of each protection path and information of correlation values of each protection path. In this case, in the processing for detecting the invalid paths each forming a sidelobe of another protection path of the protection paths in the same-path deletion processing step, the specific protection paths are sequentially detected as the invalid paths from the protection paths. For example, the specific protection paths include protection paths, each having a path timing in a predetermined range from the path timing of the another protection path and having a path level that is lower than a threshold specified based on the path level of the another protection path, and protection paths, each having a path timing in a predetermined range from the path timing of the another protection path, having a path level that is higher than a threshold specified based on the path level of the another protection path, and having a smaller difference between an angle defined by vector rotations of correlation values and an angle defined by vector rotations of correlation values of the another protection path than a specified value.

In the method for detecting the reception timings according to the third aspect of the present invention, preferably, the threshold specified based on the path level of the another protection path is a value obtained by multiplying the value of the path level of the another protection path by a positive coefficient of 1.0 or less.

In the method for detecting the reception timings according to the third aspect of the present invention, the method may include a step of recording and referring to information of the protection paths, a step of sequentially executing processing for detecting paths from the reception signals, and a protection processing step of re-determining the protection paths that are paths existing at present time in accordance with information of the respective paths detected by the path detection processing and information of the recorded protection paths. In the same-path deletion processing step, the valid paths are extracted from the protection paths re-determined in the protection processing step.

A fourth aspect of the present invention provides a base station having receiving means for receiving CDMA-system signals as reception signals and demodulating means for performing data demodulation on the reception signals. The base station is characterized in that the demodulating means includes reception-timing detecting means for receiving reception timings for despreading the reception signals, and detection processing means for performing detection processing by despreading the reception signals in accordance with the reception timings detected by the reception-timing detecting section. The reception-timing detecting means includes a same-path deletion processing section. Based on information of path timings and path levels of protection paths that are paths existing at present time, the same-path deletion processing section designates specific protection paths, each forming a sidelobe of another protection path of the protection paths, as invalid paths and extracts protection paths other than the invalid paths as valid paths. The same-path deletion processing section outputs the reception timings of the valid paths to the detection processing means as the reception timings for despreading the reception signals.

In the base station according to the fourth aspect of the present invention, in the processing for detecting the invalid paths each forming a sidelobe of another protection path of the protection paths, the same-path deletion processing section may sequentially detect the specific protection paths as the invalid paths from the protection paths, each specific protection path having a path timing in a predetermined range from the path timing of the another protection path and having a path level that is lower than a threshold specified based on the path level of the another protection path.

In the base station according to the fourth aspect of the present invention, in the processing for detecting the invalid paths each forming a sidelobe of another protection path of the protection paths, the same-path deletion processing section may extract each invalid path in accordance with information of the path timing and the path level of each protection path and information of correlation values of each protection path. In this case, in the processing for detecting the invalid paths each forming a sidelobe of another protection path of the protection paths, the same-path deletion processing section sequentially detects the specific protection paths as the invalid paths from the protection paths. For example, the specific protection paths include protection paths, each having a path timing in a predetermined range from the path timing of the another protection path and having a path level that is lower than a threshold specified based on the path level of the another protection path, and protection paths, each having a path timing in a predetermined range from the path timing of the another protection path, having a path level that is higher than a threshold specified based on the path level of the another protection path, and having a smaller difference between an angle defined by vector rotations of correlation values and an angle defined by vector rotations of correlation values of the another protection path than a specified value.

In the base station according to the fourth aspect of the present invention, the base station according to the fourth aspect of the present invention, desirably, the threshold specified based on the path level of the another protection path is a value obtained by multiplying the value of the path level of the another protection path by a positive coefficient of 1.0 or less.

In the base station according to the fourth aspect of the present invention, the reception-timing detecting means may include a protection processing memory section for recording information of the protection paths, means for sequential executing processing for detecting paths from the reception signals, and a protection processing section for re-determining the protection paths that are paths existing at present time in accordance with information of the respective paths detected by the path detection processing and information of the respective protection paths recorded in the protection processing memory section. The same-path deletion processing section extracts the valid paths from the protection paths re-determined by the protection processing section.

A fifth aspect of the present invention provides a base station having receiving means for receiving CODMA-system signals as reception signals and demodulating means for performing data demodulation on the reception signals. The base station is characterized in that the demodulating means includes reception-timing detecting means for detecting reception timings for despreading the reception signals, and detection processing means for performing detection processing by despreading the reception signals in accordance with the reception timings detected by the reception-timing detecting section. The reception-timing detecting means includes a protection processing memory section for recording information of protection paths that are paths existing at present time, and a peak detection processing section for sequentially detecting peak timings from the reception signals, the peak timings being timings indicating peaks of the levels of the reception signals. The reception-timing detecting means further includes means for detecting, as paths for the reception signal, peak timings having levels that are equal to or higher than a specified value from the peak timings detected by the peak detection processing section, and a protection processing section for re-determining the protection paths in accordance with information of the detected paths and information of the respective protection paths recorded in the protection processing memory section and for outputting the reception timings of the determined protection paths to the detection processing means as the reception timings for despreading the reception signals. The peak detection processing section outputs, of the peak timings detected from the reception signals, peak timings other than peak timings each forming a sidelobe of another peak timing.

In the base station according to the fifth aspect of the present invention, in the processing for detecting the peak timings, the peak detection processing section may detect, of the peak timings detected from the reception timings, the peak timings in a first detection range, which is a specified range in the vicinity of another peak timing having a higher level and excludes the detected peak timings. Further, the peak detection processing section may detect the peak timings that are in a second detection range, which is a specified range in the vicinity of another peak timing having a higher level, and that have levels lower than a threshold specified based on the level of the another peak timing and excludes the detected peak timings. The peak detection processing section may output the peak timings other than the excluded peak timings.

In the base station according to the fifth aspect of the present invention, preferably, threshold specified based on the level of the another peak timing is a value obtained by multiplying the value of the level of the another peak timing by a positive coefficient of 1.0 or less.

Brief Description of the Drawings

Fig. 1 is a graph for describing one example of a conventional same-path determination method;
Fig. 2 is a graph showing one example of a propagation model in a low-speed fading environment;
Fig. 3 is a graph showing one example of a propagation model in a high-speed fading environment;
Fig. 4 is a block diagram showing the configuration of a CDMA reception apparatus according to a first embodiment of the present invention;
Fig. 5 is a graph for describing one example of a same-path deletion processing according to the first embodiment of the present invention;
Fig. 6 is a block diagram showing a detailed configuration of a searcher section in the first embodiment of the present invention;
Fig. 7 is a block diagram showing a detailed configuration of a path control section in the first embodiment of the present invention;
Fig. 8 is a flow chart for describing the operation of the path control section in the first embodiment of the present invention;
Fig. 9 is a graph for describing one example of same-path determination in peak detection processing in the first embodiment of the present invention;
Fig. 10 is a graph for describing one example of same-path determination in protection processing in the first embodiment of the present invention;
Fig. 11 is a view showing the transition of a protection-path state in the protection processing in the first embodiment of the present invention;
Fig. 12 is a flow chart showing the operation of one example of same-path deletion processing in the first embodiment of the present invention;

Fig. 13 is a block diagram showing a detailed configuration of a path control section in a second embodiment of the present invention;

Fig. 14 is a flow chart for describing the operation of the second embodiment of the present invention;

Fig. 15 is a block diagram showing a detailed configuration of a path control section in a third embodiment of the present invention;

Fig. 16 is a graph for describing one example of same-path determination in peak detection processing in the third embodiment of the present invention;

Fig. 17 is a flow chart for describing the operation of the third embodiment of the present invention;

Fig. 18 is a block diagram showing the configuration of a base-station apparatus according to a fourth embodiment of the present invention;

Fig. 19 is a view showing an example of path channels in the fourth embodiment of the present invention;

Fig. 20 is a graph showing an example of path levels in the fourth embodiment of the present invention;

Fig. 21 is a view showing an example of path channels in the fourth embodiment of the present invention;

Fig. 22 is a graph showing an example of path levels in the fourth embodiment of the present invention;

Fig. 23 is a graph showing an example of path levels in one example of the present invention;

Fig. 24 is a graph showing an example of a correlation-value vector in one example of the present invention;

Fig. 25 is a graph showing an example of a correlation-value vector in one example of the present invention;

Fig. 26 is a graph showing an example of correlation-value vectors in one example of the present invention;

Fig. 27 is a graph showing an example of path levels of an alternative example of the present invention;

Fig. 28 is a graph showing an example of a correlation-value vector in the alternative example of the present invention;

Fig. 29 is a graph showing an example of a correlation-value vector in the alternative example of the present invention; and

Fig. 30 is a graph showing an example of correlation-value vectors in the alternative example of the present invention.

Best Mode for Carrying Out the Invention

Embodiments of the present invention will be described below in detail with reference to the accompanying drawings.

The present invention is characterized by performing optimum same-path determination using path levels. Without limitation to specific propagation environments, the present invention can improve a reception characteristic in every case in various propagation environments. The "specific propagation environments" herein refer to, for example, a propagation environment in which individual paths are close to each other, such as a high-speed fading environment, which is often found in urban areas, and a propagation environment in which individual paths are far apart from each other, such as a low-speed fading environment, which is often found in suburban areas.

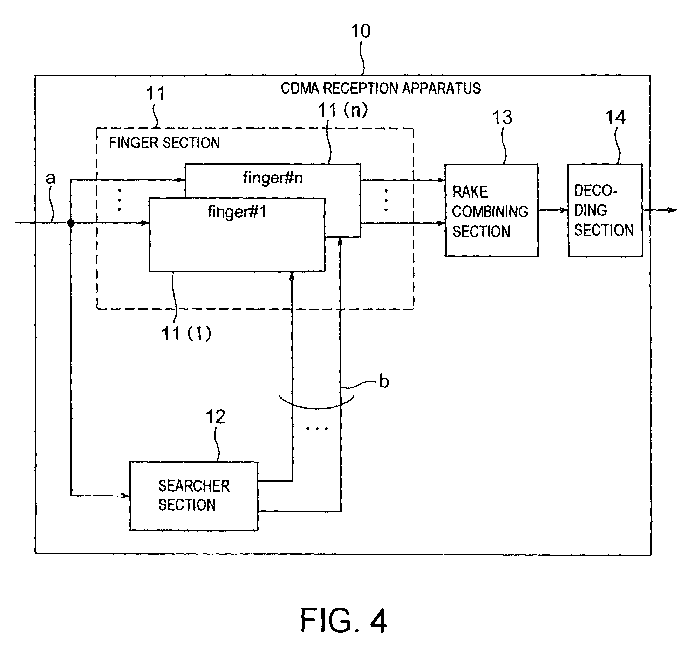

Fig. 4 is a block diagram showing the configuration of a CDMA reception apparatus 10 according to a first embodiment of the present invention. The illustrated CDMA reception apparatus 10 includes a finger section 11, a searcher section 12, a rake combining section 13, and a decoding section 14. The finger section 11 is also referred to as a "detection processing section" and the searcher section 12 is also referred to as a "reception-timing detecting section".

Reception signals a input to the CDMA reception apparatus 10 are input to the finger section 11 and the searcher section 12. The finger section 11 includes first to n-th finger circuits 11(1) to 11(n) corresponding to n channels #1 to #n (n is an integer of 2 or more).

The searcher section 12 determines correlation-value levels while shifting timings for despreading the reception signals a to thereby search for optimum reception timings, and issues instructions for reception timings at which the finger section 11 should perform reception to the first to n-th finger circuits 11(1) to 11(n) of the finger section 11 at peak timings (hereinafter referred to as "finger path timings") b.

The finger section 11 despreads the reception signals a at the reception timings issued at the path timings b to perform detection. Outputs from the first to n-th finger circuits 11(1) to 11(n) of the finger section 11 are input to the rake combining section 13 and are added thereby. Data resulting from the addition by the rake combining section 13 is decoded by the decoding section 14.

In this case, the first to n-th finger circuits 11(1) to 11(n) of the finger section 11 are prepared in accordance with the number of paths to be processed by the CDMA reception apparatus 10. For example, in the case of n = 10, up to 10 paths can be rake-combined.

Here, in the CDMA reception apparatus 10 of the present embodiment, after the conventional protection processing for detecting a same path, the searcher section 12 further performs same-path deletion processing. In the same-path deletion processing, when individual paths are close to each other, the searcher section 12 refers to the path levels of the respective paths and determines whether or not they are the same path based on the differences between those path levels. For example, when the path level of one path is less than a threshold, obtained by multiplying the path level of another path that has path timing closer to the former path, by 1. 0 or less, the path having the lower path level is determined to be a sidelobe of the another path and both the paths are determined to be the same path. This is an optimum same-path determination using path levels according to the present embodiment.

The searcher section 12 designates each protection path determined to be same path as an invalid finger path (an invalid path) and designates only protection paths determined to be different paths as valid finger paths (valid paths), and outputs the reception timing b of each path of the valid finger paths to the finger section 11.

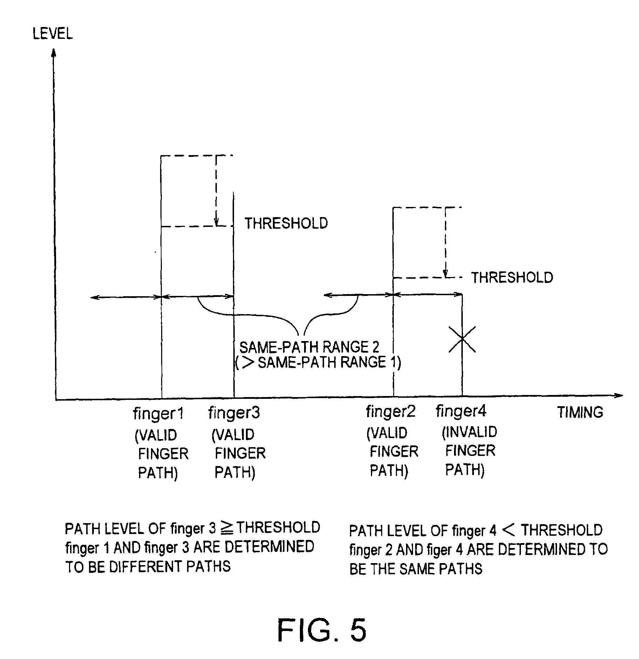

Fig. 5 is a graph for describing one example of the same-path deletion processing according to the present embodiment. In Fig. 5, the horizontal axis indicates timing and the vertical axis indicates a level. In the present embodiment, a range for detecting a same path in the protection processing is referred to as a "first detection range". This "first detection range" has the range of a "same-path range 1" before and after protection path timing, i.e., (protection path timing $\pm$ the same-path range 1). Also, a range for detecting a same path in the same-path deletion processing is referred to as a "second detection range". This "second detection range" has the range of a "same-path range 2" before and after protection path timing, i.e., (protection path timing $\pm$ the same-path range 2). In this case, the "same-path range 1" is smaller than the "same-path range 2".

Referring to Fig. 5, in the present embodiment, in the same-path deletion processing, for each protection path, the searcher section 12 performs detection as to whether or not another protection path exists in the range of the "same-path range 2" before and after the center of each protection path timing, i.e., at timing within "protection path timing $\pm$ the same-path range 2".

Now, suppose there is another protection path. In this case, the searcher section 12 compares the individual protection path levels. In the case of a protection path level $\geqq$ a threshold (= a center protection path level $\times$ a coefficient), the path is determined to be a different path, and in the case of a protection path level < a threshold (= a center protection path level $\times$ a coefficient), the path is determined to be the same path (where the coefficient $\leqq$ 1.0).

The searcher section 12 designates each protection path determined to be the same path as an invalid finger path and designates only protection paths determined to be different paths as valid finger paths, and outputs the reception timing b of each path of the valid finger paths to the finger section 11.

For example, a finger 3 shown in Fig. 5 is a protection path that exists at timing of "a finger 1 $\pm$ the same-path range 2" and the level of the protection path is equal to or higher than the threshold. Thus, the searcher section 12 determines that the finger 1 and the finger 3 are different paths, and designates both the finger 1 and the finger 3 as valid finger paths.

A finger 4 shown in Fig. 5 is a protection path that exists at timing of "a finger 2 $\pm$ the same-path range 2" and the level of the path is lower than the threshold. Thus, the searcher section 12 determines that the finger 2 and the finger 4 are the same path, and designates the finger 2 as a valid finger path and designates the finger 4 as an invalid finger path.

In general, when only one path exists, only a center path level is sharp and high and the level of a sidelobe of the path is significantly low compared to the center path level. The same-path determination method described above makes use of the phenomenon. With this arrangement, even when the "same-path range 1" that is used in protection processing is set to be small, a protection path that appears to be a sidelobe can be designated as an invalid finger path in the same-path deletion processing.

Suppose the "same-path range 1" used in the protection processing is set to be small. In this case, when individual paths are close to each other in a high-speed fading environment, which is often found in urban areas, the passes are easily separated, thereby improving the characteristic. However, when individual paths are far apart from each other in a low-speed fading environment, which is often found in suburban areas, sidelobes are easily received and are used for rake combining. This poses a problem in that the characteristic deteriorates.

In contrast, suppose the same-path range 1 used in protection processing is increased. In this case, when individual paths are far apart from each other in a low-speed fading environment, which is often found in suburban areas, the characteristic improves because of difficulty of receiving sidelobes. However, when individual paths are close to each other in a high-speed fading environment, which is often found in urban areas, a path that can be a different path even with a small fluctuation is determined to be the same path. This poses a problem in that the characteristic deteriorates.

According to the CDMA reception apparatus of the present embodiment and the method for receiving reception timings for despreading the reception signals of the CDMA reception apparatus, with respect to such various propagation environments, the reception characteristic can be equally improved in any case.

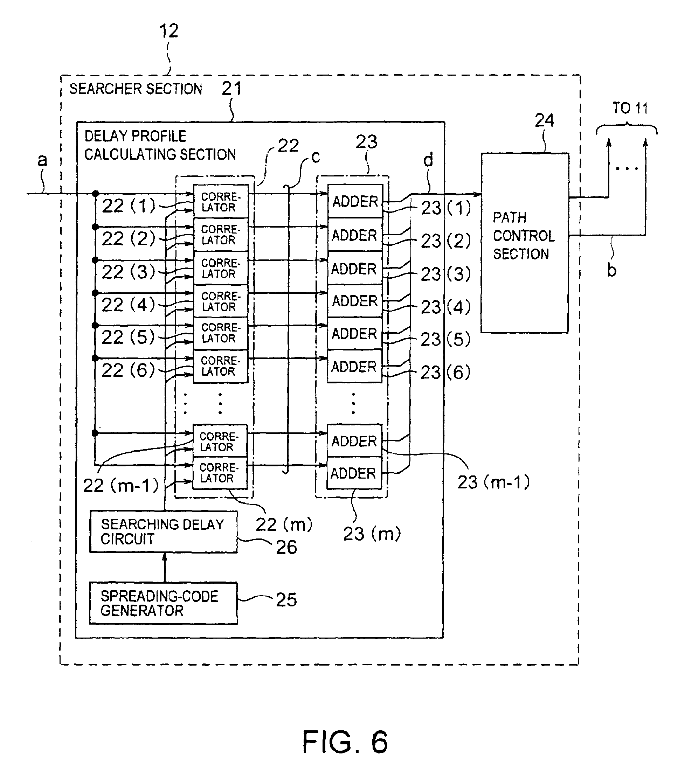

Fig. 6 is a block diagram showing a detailed configuration of the searcher section 12 in the present embodiment. Referring to Fig. 6, the searcher section 12 in the present embodiment has a delay profile calculating section 21 and a path control section 24.

As shown in Fig. 6, the reception signals a are input to first to m-th correlators 22(1) to 22(m) (m is an integer of 2 or more) of a correlator group 22. The first to m-th correlators 22(1) to 22(m) perform despreading at reception timings that are slightly different from one after another. The correlator group 22 outputs correlation values c, which are then input to first to m-th adders 23(1) to 23(m), respectively, of an adder group 23. The first to m-th adders 23(1) to 23(m) add (integrate) the correlation values c a predetermined number of times (which can be changed as a parameter) and output each added correlation value (a delay profile) d to the path control section 24. A spreading-code generator 25 generates a spreading code for despreading performed by the correlator group 22 and outputs the spreading code to a searching delay circuit 26.

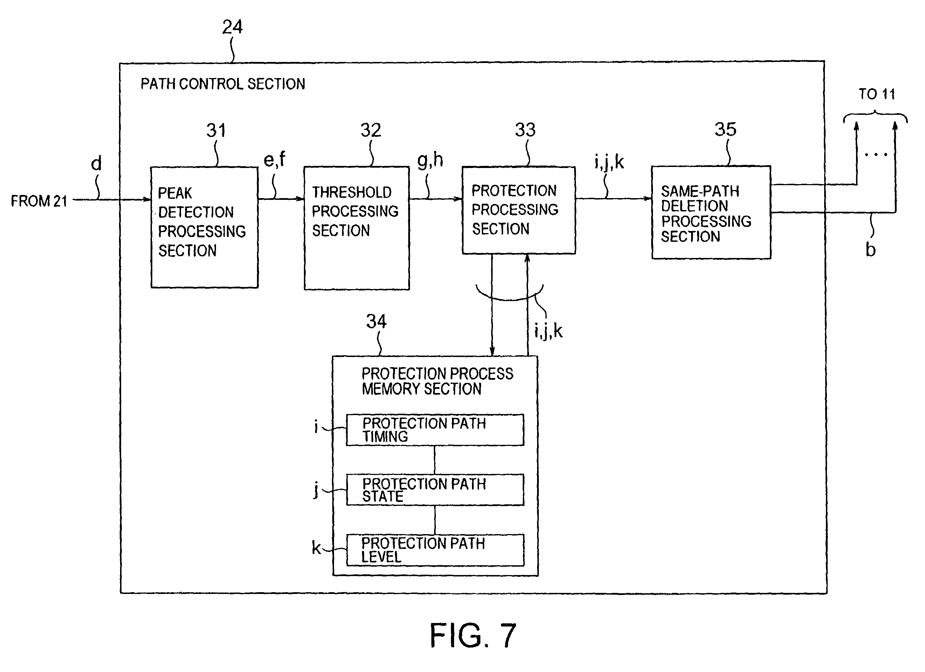

Fig. 7 is a block diagram showing a detailed configuration of the path control section 24 in the present embodiment. Referring to Fig. 7, the path control section 24 in the present embodiment includes a peak detection processing section 31, a threshold processing section 32, a protection processing section 33, a protection processing memory section 34, and a same-path deletion processing section 35.

The peak detection processing section 31 searches the added correlation values d for high-level reception timings by a specified number of peaks (the number can be changed as a parameter). That is, the peak detection processing section 31 detects peaks, the number of which corresponding to the specified number of peaks, and outputs peak timing e and a peak level f of each path to the threshold processing section 32.

The threshold processing section 32 performs threshold processing for selecting paths that are equal to or greater than various thresholds based on the peak levels f, and outputs paths that are equal to or greater than the thresholds to the protection processing section 33 as search path timings g and search path levels h.

The protection processing section 33 reads, from the protection processing memory section 34, a timing i (also including sector information and branch information) of a protection path that is a result of the previous protection processing, a state j (also including the number of protection path times) of the protection path, and a level k of the protection path, and compares them with a timing g of a search path that is a currently-found path and a level h of the search path. The protection processing section 33 then outputs a timing i of a protection path that is a result of the current protection processing, a state j of the protection path, and a level k of the protection path to the same-path deletion processing section 35. The protection processing section 33 also writes the results of the protection processing into the protection processing memory section 34.

For each protection path, the same-path deletion processing section 35 determines whether or not another protection path exists at the timing of "protection path timing ± the same-path range 2" (the second detection range) centering each protection path timing.

When another protection path exists, the same-path deletion processing section 35 performs comparison of the respective protection path levels. In a case in which the protection path level of another protection path is equal to or higher than a threshold (= a center protection path level x a coefficient), the same-path deletion processing section 35 determines that the another protection path is a different path. In a case in which the protection path level of another protection path is lower than a threshold (= a center protection path level × a coefficient), the same-path deletion processing section 35 determines that the another protection path is (a sidelobe of) the same path as the center protection path (where the coefficient ≦ 1.0).

The same-path deletion processing section 35 designates each protection path determined to be the same as an invalid finger path and designates only protection paths determined to be different paths as valid finger paths. The same-path deletion processing section 35 outputs the reception timing of each path of the valid finger paths to the finger section 11 at the finger path timing (including sector information and branch information) b.

The operation of the same-path determination in the present embodiment will now be described in detail with reference to Figs. 7, 8, 9, 10, 11, 12, and 5.

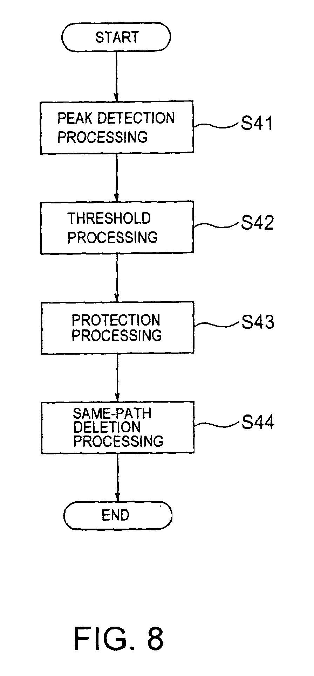

As shown in Fig. 7, the path control section 24 includes the peak detection processing section 31, the threshold processing section 32, the protection processing section 33, the protection processing memory section 34, and the same-path deletion processing section 35. Fig. 8 is a flow chart showing the operation of the path control section 24.

First, the peak detection processing section 31 searches the added correlation values d for high-level reception timings by a specified number of peaks (the number can be changed as a parameter). That is, the peak detection processing section 31 performs peak-detection processing for detecting peaks, the number of which corresponding to the number of specified peaks. The peak detection processing section 31 outputs the peak timing e and peak level f of each path to the threshold processing section 32 (in step S41 in Fig. 8). When the peaks are detected, however, a peak within "peak timing ± the same-path range 1" (the first detection range) is determined to be the same path. Thus, the peak detection processing section 31 does not output the path to the threshold processing section 32.

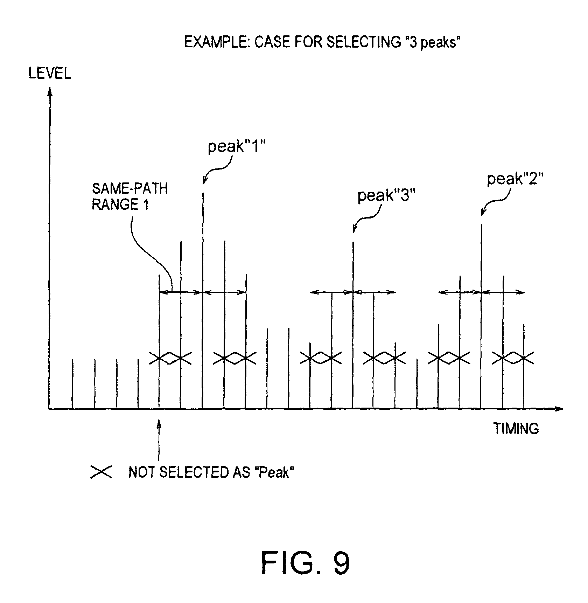

Fig. 9 shows an example of the peak detection processing, the example corresponds to a case of "the number of peaks = 3". Here, peaks are detected in decreasing order of peak levels so as to correspond to number of peaks (three peaks).

Next, the threshold processing section 32 performs threshold processing for selecting paths that are equal to or greater than various thresholds based on the peaks, and outputs paths that are equal to or greater than the thresholds to the protection processing section 33 as search path timings g and search path levels h (in step S42 in Fig. 8).

Next, the protection processing section 33 reads, from the protection processing memory section 34, a timing i (also including sector information and branch information) of a protection path that is a result of the previous protection processing, a state j (also including the number of protection path times) of the protection path, and a level k of the protection path, and compares them with a timing g of the search path that is a path currently found and a level h of the search path so as to perform protection processing. The protection processing section 33 then outputs the timing i of a protection path that is a result of the current protection processing, the state j of the protection path, and the level k of the protection path to the same-path deletion processing section 35 (in step S43 in Fig. 8). The protection processing section 33 also writes the results of the protection processing into the protection processing memory section 34.

In the protection processing at the protection processing section 33, the processing as follows is performed. First, by referring to a timing difference between the timing g of a search path that is a currently-found path found and the timing i of a protection path that is a result of the previous protection processing, the protection processing section 33 determines whether or not they are the same path. Next, based on the result of the same-path determination, the protection processing section 33 determines a protection path state.

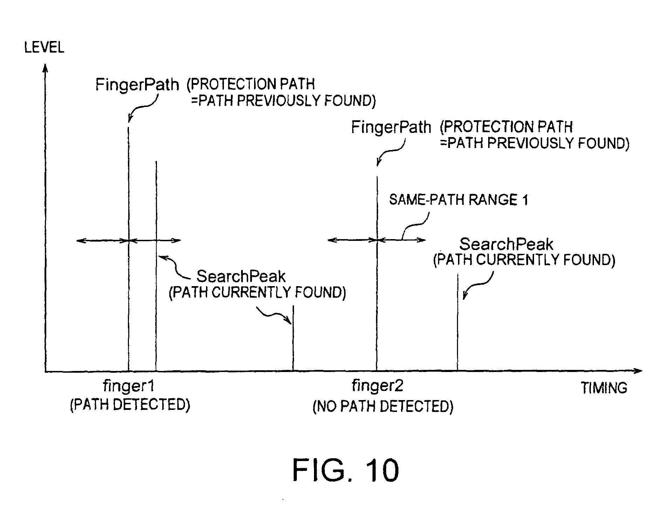

Fig. 10 shows an example of the same-path determination in the protection processing and is the same as the figure for the same-path determination method illustrated in Fig. 1 for the conventional path control section. That is, the conventional path control section includes the peak detection processing section 31, the threshold processing section 32, the protection processing section 33, and the protection processing memory section 34, but does not include the same-path deletion processing section 35 shown in Fig. 7.

In Fig. 10, the horizontal axis indicates timing and the vertical axis indicates a level. In Fig. 10, finger paths indicate protection paths that are results of the previous protection processing, i.e., paths found previously, and search peaks indicate paths that are currently found by path searching.

As shown in Fig. 10, the protection processing section 33 determines whether or not paths are the same path. First, the protection processing section 33 refers to a timing difference between the timing g of a search path that is a path currently found and the timing i of a protection path that is a result of the previous protection processing. Next, based on the timing difference, the protection processing section 33 determines whether or not the path g currently found exists in "protection path timing i ± the same-path range 1". When the path g currently found exists therein, the protection processing section 33 determines that the path g is the same path, and when the path g currently found at does not exist, the protection processing section 33 determines the path g is a different path.

For example, with respect to a finger 1 shown in Fig. 10, a path currently found exists in "the finger 1 ± the same-path range 1". Thus, the protection processing section 33 determines that that the same path as the previously found path is found, i.e., "a path is detected".

In contrast, with respect to a finger 2 shown in Fig. 10, a path currently found does not exist in "the finger 2 ± the same-path range 1". Thus, the protection processing section 33 determines that the same path as the previously found path is not found, i.e., "no path is detected".

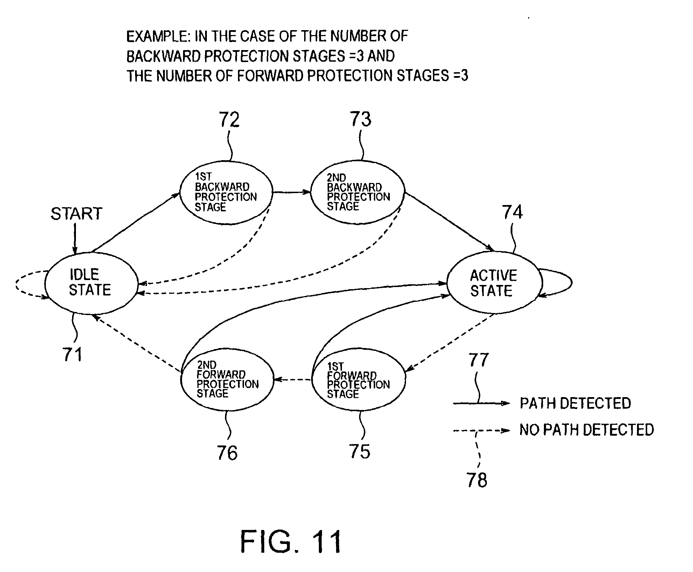

Fig. 11 is one example of a transition view showing protection path states in the protection processing at the protection processing section 33, the example corresponding to a case in which the number of backward protection stages is 3 and the number of forward protection stages is 3.

In Fig. 11, solid lines (77 in Fig. 11) indicate cases, as the finger 1 in Fig. 10, in which a same path as that previously found is found, i.e., "a path is detected". Dotted lines (78 in Fig. 11) indicate cases, as the finger 2 shown in Fig. 10, in which a same path as that previously found is not found, i.e., "no path is found".

The protection path states include an idle state (an idle state) (71 in Fig. 11), first and second backward protection states (72 and 73 in Fig. 11), an active state (an active state) (74 in Fig. 11), and first and second forward protection states (75 and 76 in Fig. 11).

The protection path state starts in the idle state (71 in Fig. 11). A path that is currently found for the first time is protected as the first backward protection stage (72 in Fig. 11), rather than being immediately put into the active path (74 in Fig. 7). Since Fig. 11 shows an example in which the number of backward protection stages is 3, only after a same path is found three consecutive times, the path is put into the idle state (74 in Fig. 11).

Similarly, when a path found previously is not currently found, the path is protected as the first forward protection stage (75 in Fig. 11), rather than being immediately put into the idle state (71 in Fig. 11). Since Fig. 11 shows an example in which the number of backward protection stages is 3, only after a same path is not found three consecutive times, the path is deleted so as to be put into the idle state (71 in Fig. 11).

In this manner, the protection processing section 33 performs protection processing so as to prevent the assignment of a protection path from changing frequently even when the level fluctuates and/or the reception timing varies to some extent due to fading or the like.

The above description is equally applicable to the same-path determination method for the conventional path control section.

Unlike the conventional path control section, when individual paths are close to each other, the same-path deletion processing section 35 in the path control section 24 of the present invention lastly refers to the path levels and determines that a path level that is lower than a threshold is the same path. The same-path deletion processing section 35 then designates each protection path determined to be the same path as an invalid finger path and designates only protection paths that are determined to be different paths as valid finger paths, and outputs the reception timing b of each path of the valid finger paths to the finger section 11 (in step S44 in Fig. 8).

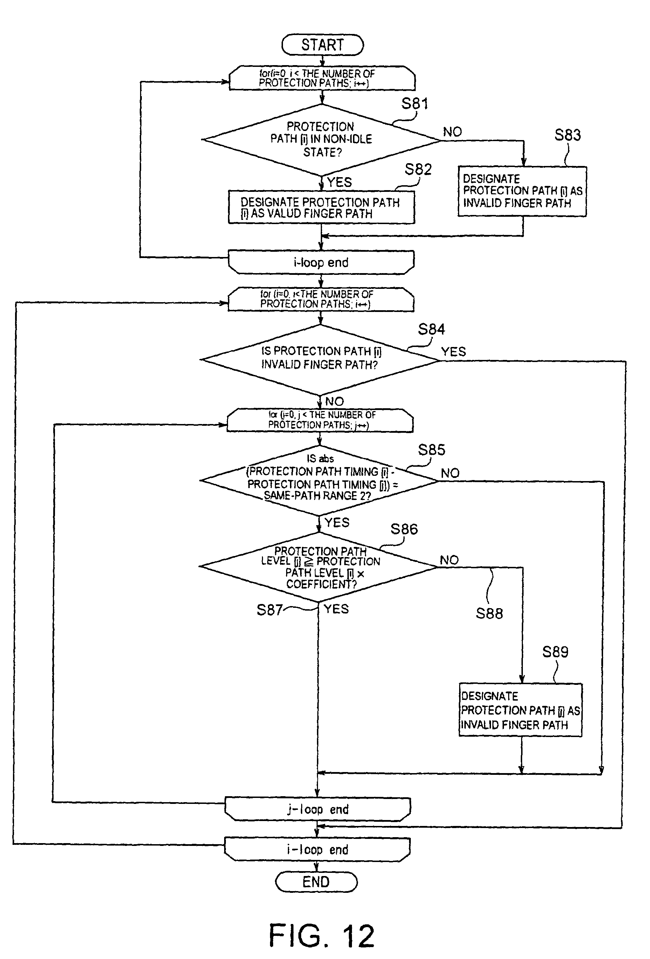

Fig. 12 is a flow chart showing the operation of the same-path deletion processing section 35 and Fig. 5 shows one example of the same-path deletion processing.

The same-path deletion processing section 35 first sets protection paths that are in protection path states other than the idle state as valid finger paths (in step S81, step S82, and step S83 in Fig. 12).

Next, the same-path deletion processing section 35 checks whether or not each protection path i is an invalid finger path (in step S84 in Fig. 12). When a protection path i is not an invalid finger path, the same-path deletion processing section 35 checks whether or not another protection path j exists at the timing of "(the timing of the protection path i) $\pm$ (the same-path range 2)" (the second detection range) centering the timing of each protection path i (in step S85 in Fig. 12). In this case, the same-path range 2 is larger than the same-path range 1.

Here, when another protection path j exists, the same-path deletion processing section 35 performs comparison of each protection path level (in step S86 in Fig. 12). When the level of a protection path j is equal to or higher than a threshold (= "the level of the center protection path i" $\times$ a coefficient), the same-path deletion processing section 35 determines that the protection path j is a different path (in step S87 in Fig. 12). When the level of the protection path j is lower than a threshold (= "the level of the center protection path i $\times$ a coefficient), the same-path deletion processing section 35 determines that the protection path j is the same path (in step S88 in Fig. 12) (where the coefficient $\leqq$ 1.0).

When it is determined that the protection path j is the same path, the same-path deletion processing section 35 designates the protection path j as an invalid finger path (in step S89 in Fig. 12). In this manner, the same-path deletion processing section 35 designates each protection path determined to be the same path as an invalid finger path and designates only protection paths determined to be different paths as valid finger paths. The same-path deletion processing section 35 then outputs the reception timing b of each path of the valid finger paths to the finger section 11.

For example, a finger 3 shown in Fig. 5 is a protection path that exists at the timing of "the finger 1 $\pm$ the same-path range 2", and the level of the protection path is equal to or higher than the threshold. Thus, the same-path deletion processing section 35 determines that the finger 1 and the finger 3 are different paths from each other and designates both the finger 1 and the finger 3 as valid finger paths.

A finger 4 shown in Fig. 5 is a protection path that exists at the timing of "the finger 2 $\pm$ the same-path range 2", and the path level of the protection path is lower than the threshold. Thus, the same-path deletion processing section 35 determines that the finger 2 and the finger 4 are the same path and designates the finger 2 as a valid finger path and designates the finger 4 as an invalid finger path.

In general, when only one path exists, only the center path level is sharp and high and the level of a sidelobe of the path is significantly low compared to the center path level. The same-path determination method described above makes use of the phenomenon. Thus, addition of the same-path deletion processing (in step S44 in Fig. 8) to the end of the protection processing (in step S43 in Fig. 8) allows a protection path that appears to be a sidelobe to be designated as an invalid finger path in the same-path deletion processing, even when "the same-path range 1" used in the protection processing is reduced.

Further, dividing the same-path determination processing into the protection processing and the same-path deletion processing provides the following advantage. That is, even when a path is mistakenly designated as an invalid finger path because of an accidental drop at a certain point due to fading or the like, the path is not deleted from protection paths. This can prevent the found protection path from being missed.

When the "same-path range 1" used in the protection processing is reduced, the conventional same-path determination method has the following problem. That is, when individual paths are close to each other in a high-speed fading environment, which is often found in urban areas, the passes are easily separated, thereby improving the characteristic. However, when individual paths are far apart from each other in a low-speed fading environment, which is often found in suburban areas, sidelobes are easily received and are used for rake combining. This poses a problem in that the characteristic deteriorates.

In addition, conversely, when the "same-path range 1" used in the protection processing is increased, the conventional same-path determination method has the following problem. When individual paths are far apart from each other in a low-speed fading environment, which is often found in suburban areas, the characteristic improves because of difficulty of receiving sidelobes. However, when individual paths are close to each other in a high-speed fading environment, which is often found in urban areas, a path that can be a different path even with a small fluctuation is determined to be the same path. This poses a problem in that the characteristic deteriorates.

As described above, according to the present embodiment, for such various propagation environments, the reception characteristic can be equally improved in any case.

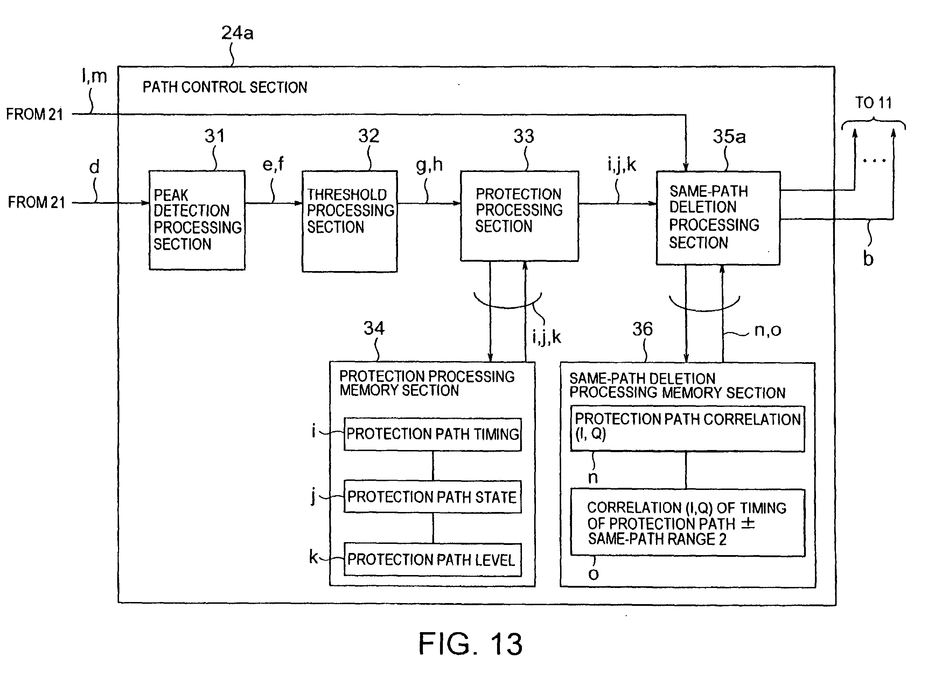

Fig. 13 is a block diagram showing a detailed configuration of a path control section 24a according to a second embodiment of the present invention. Referring to Fig. 13, the path control section 24a of the present embodiment is different from the path control section 24 illustrated in Fig. 7 in that the path control section 24a uses not only a path level at a given moment but also a fading state to determine whether or not a path is the same. That is, the same-path deletion processing section 35 is changed to a same-path deletion processing section 35a and further a same-path deletion processing memory section 36 is provided. Otherwise, the path control section 24a has the same configuration and the same operation as the path control section 24 illustrated in Fig. 7.

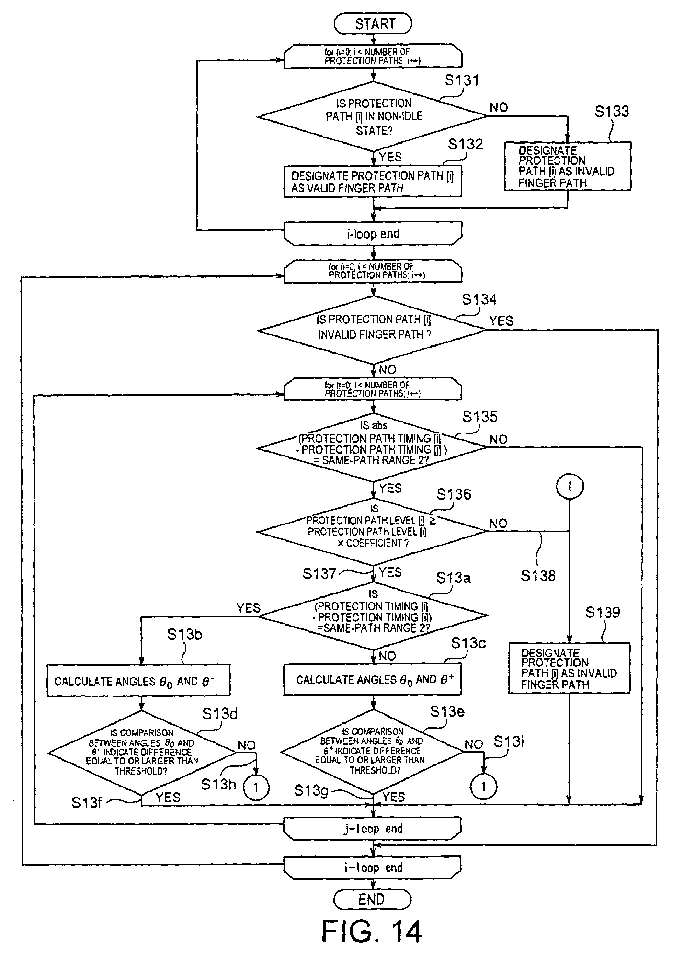

Fig. 14 is a flow chart for describing the operation of the same-path deletion processing section 35a according to the present embodiment.

After outputting the reception timing b of each path of valid finger paths to the finger section 11, the same-path deletion processing section 35a writes the correlation value (IQ) I of each finger, i.e., each protection path extracted from the delay profile calculating section 21, and the correlation value m of "the finger ± the same-path range 2", into the same-path deletion processing memory section 36 as the correlation value n of each finger and the correlation value o of "the finger ± the same-path range 2" and holds those values therein.

Specifically, now suppose that the correlation value of a finger 0 is f0 and the correlation values of "the finger 0 ± the same-path range 2" are f0+ and f0-, respectively, (where f0, f0+, and f0- are vectors).

As in the first embodiment, the same-path deletion processing section 35a first determines whether or not a path is the same path (in step S131, step S132, step S133, step S134, step S135, step S136, step S137, step S138, and step S139 in Fig. 14).

Next, in order to compare fading states, the same-path deletion processing section 35a reads the correlation value n of each previous finger, i.e., each previous protection path, and the correlation value o of "the finger ± the same-path range 2" from the same-path deletion processing memory section 36. The same-path deletion processing section 35a also extracts the correlation value I of each current finger and the correlation value m of "the finger ± the same-path range 2" from the delay profile calculating section 21.

Specifically, now suppose that the correlation value of the current finger 0 is f0_curr and the correlation values of "the finger 0 ± the same-path range 2" are f0+_curr and f0-_curr, respectively.

The same-path deletion processing section 35a determines angles θ, θ+, and θ - that are defined by vectors f0_curr and f0, vectors f0+_curr and f0+, and vectors f0-_curr and f0-, respectively, by using trigonometric-function cosine formulae (in step S13a, step S13b, and step S13c in Fig. 14). That is, by substituting the values of cosine of the angles θ, θ+, and θ- determined by the following formulae into an inverse function cos-1, the same-path deletion processing section 35a can determine the respective angles θ, θ+, and θ-:

$$\cos \theta 0 = (f0 \cdot f0\_curr)/|f0\|f0\_curr|$$

$$\cos \theta + = (f0+ f0+\_curr)/|f0+\|f0+\_curr|$$

$$\cos \theta - = (f0- \cdot f0-\_curr)/|f0-\|f0-\_curr|$$

where (f·g) indicates the scalar product of vectors f and g and |f| indicates the size of the vector f.

Lastly, the same-path deletion processing section 35a compares the θ0 and θ+ or θ0 and θ- (in step S13d and step S13e in Fig. 14). When the difference is equal to or greater than a specified threshold (a specified value), the same-path deletion processing section 35a determines that they are different paths (in step S13f and step S13g in Fig. 14), and when the difference is smaller than a threshold (a specified value), the same-path deletion processing section 35a determines that they are the same path (in step S13h and step S13i in Fig. 14).

As in the case of the first embodiment, the same-path deletion processing section 35a designates each protection path determined to be the same path as an invalid finger path (in step S139 in Fig. 14) and designates only protection paths determined to be different paths as valid finger paths, and outputs the reception timing b of each path of the valid finger paths to the finger section 11.

The same-path deletion processing section 35a writes the correlation I of each current finger extracted from the delay profile calculating section and the correlation m of "the finger ± the same-path range 2" into the same-path deletion processing memory section 36 as the correlation n of each finger and the correlation o of "the finger ± the same-path range 2", to thereby update the values.

As described above, according to the present embodiment, in addition to the advantages of the first embodiment, a phenomenon in which the same paths are affected by similar fading is used and a previous correlation value and a current correlation value are compared with each other to check whether or not the angles of vector rotations are the same, thereby detecting the same path. This allows more accurate determination as to whether or not a path is the same.

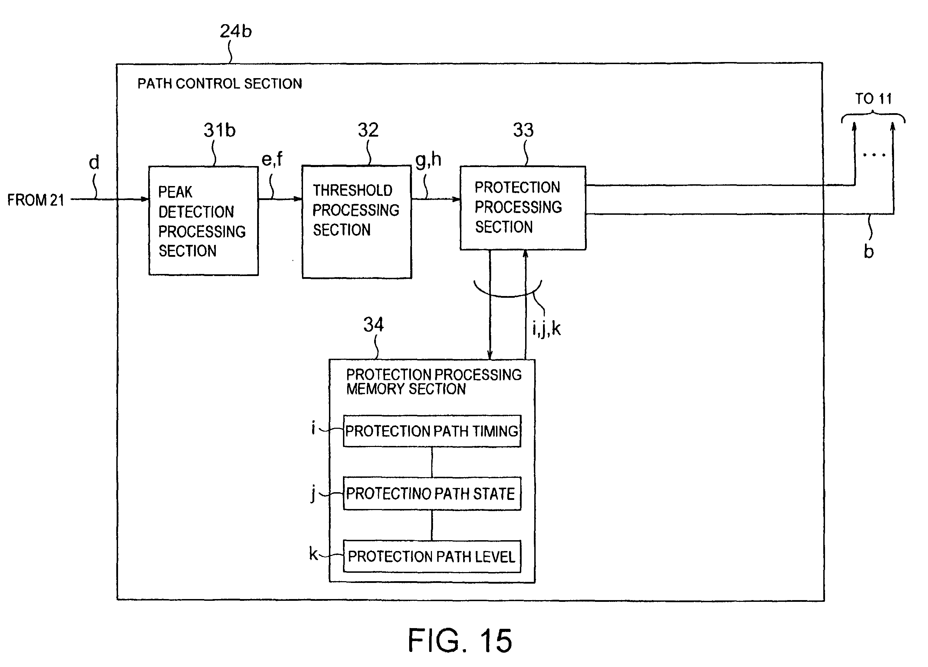

Fig. 15 is a block diagram showing a detailed configuration of a path control section 24b according to a third embodiment of the present invention. Referring to Fig. 15, the path control section 24b of the present embodiment is different from the path control section 24 in the first embodiment in that the same-path deletion processing performed by the same-path deletion processing section 35 in the path control section 24 is performed by a peak detection processing section 31 b.

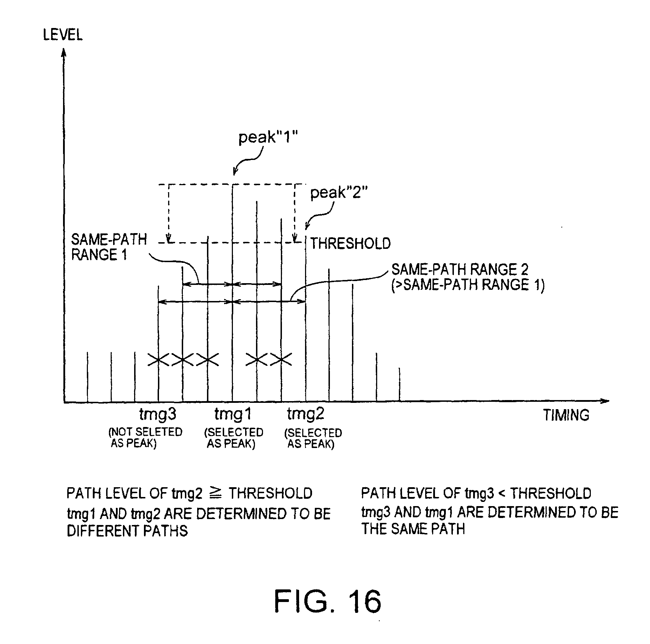

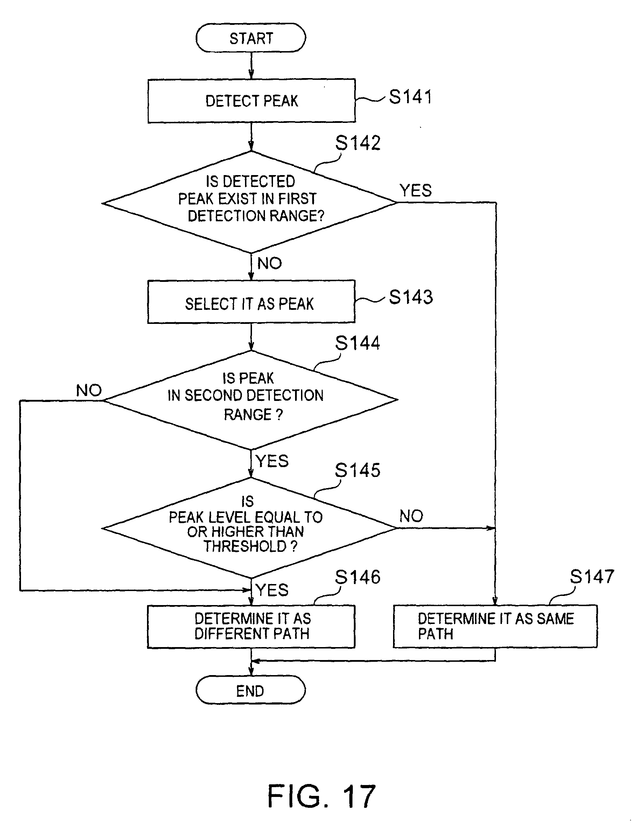

Fig. 16 is a graph for describing one example of same-path determination in peak detection processing of the present embodiment and Fig. 17 is a flow chart for describing the operation of the present embodiment.

As shown in Fig. 16, when detecting peaks, the peak detection processing section 31b first determines that a peak within "peak timing ± the same-path range 1" (the first detection range) is the same path, as in the first embodiment, and thus does not select that peak as a peak (in step S141, step S142, and step S147).

Next, when a peak at the timing of "peak timing ± the same-path range 2" (the second detection range) exists (in step S144), the peak detection processing section 31b refers to the level of the peak (in step S145). When the level of the detected peak is equal to or higher than a threshold (= a center peak level x a coefficient) (YES in step S145), the peak detection processing section 31b determines that the path is a different path (in step S146). When the level of the detected peak is lower than a threshold (= a center peak level $\times$ a coefficient) (NO in step S145), the peak detection processing section 31 b determines that the path is the same path (in step S147) (where the coefficient $\leqq$ 1.0).

Then, the peak detection processing section 31b does not select the peak determined to be the same path and outputs peaks, excluding the path determined to be the same path from the detected peaks, to the threshold processing section 32.

For example, a tmg 2 in Fig. 16 indicates a peak that exists at the timing of "tmg 1 ± the same-path range 2", and the level of the peak is equal to or higher than a threshold. Thus, the peak detection processing section 31b determines that the tmg 1 and the tmg 2 are different paths.

Also, a tmg 3 in Fig. 16 indicates a peak that exists at the timing of "tmg 1 ± the same-path range 2", and the level of the peak is lower than the threshold. Thus, the peak detection processing section 31b determines that the tmg 1 and the tmg 2 are the same path and thus does not select the tmg 3 as a peak.

As described above, according to the present embodiment, the same advantages as those in the first embodiment can be achieved by incorporating the same-path deletion processing function into the existing peak-detection processing section 31 rather than incorporating a new same-path deletion processing section 35 into the path control section 24b. Accordingly, the CDMA reception apparatus of the present invention can be provided with a simple configuration.

In addition, the second embodiment and the third embodiment can be practiced in combination. That is, connecting the same-path deletion processing memory section 36 of the second embodiment to the peak detection processing section 31b of the third embodiment allows the execution of the same-path deletion processing using correlation values in the second embodiment in addition to the same-path deletion processing using peak timings and peak levels.

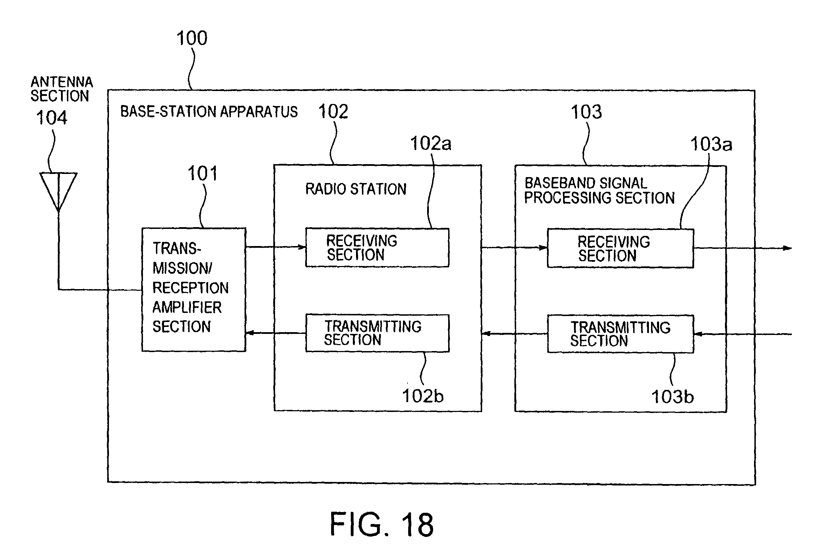

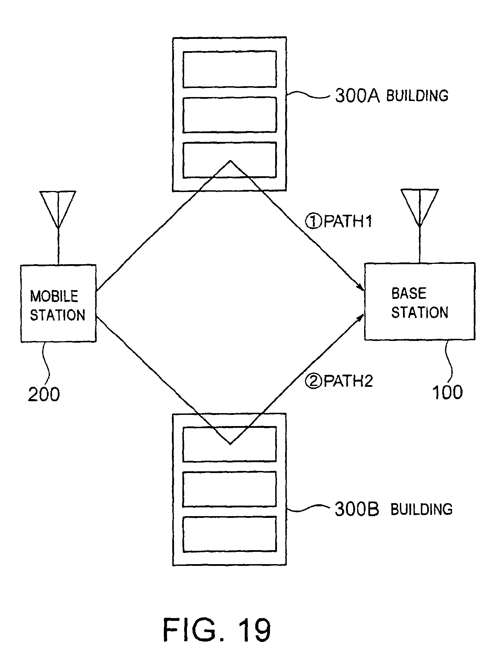

Fig. 18 is a block diagram showing the configuration of a base-station apparatus 100 according to a fourth embodiment of the present invention and Fig. 19 is a view showing one example of path channels in the present embodiment.

In the base-station apparatus 100 for CDMA communication according to the present embodiment, a receiving section 103a in a base band signal processing section 103 has the function of the CDMA reception apparatus 10 of the first embodiment. Thus, the base-station apparatus 100 is characterized in that an improved reception characteristic is achieved equally for various propagation environments compared to a conventional apparatus.

Referring to Fig. 18, the base-station apparatus 100 of the present embodiment includes a transmission/reception amplifier section 101, a radio section 102, the baseband signal processing section 103, and an antenna section 104.

The antenna section 104 transmits/receives radio signals based on CDMA. The transmission/reception amplifier section 101 amplifies reception signals received via the antenna section 104, amplifies transmission signals to be transmitted via the antenna section 104, and demultiplexes the reception signals and transmission signals.

The radio section 102 has a receiving section 102a and a transmitting section 102b. The receiving section 102a converts reception signals, amplified by the transmission/reception amplifier section 101, into digital signals. The transmitting section 102b converts transmission signals into analog signals and converts the analog signals into transmission RF signals by using orthogonal modulation.

The base band signal processing section 103 includes the receiving section 103a and a transmitting section 103b. The receiving section 103a performs data demodulation on the reception signals, converted by the receiving section 102a of the radio section 102 into the digital signals. The transmitting section 103b performs baseband processing, such as data modulation, on transmission signals.

As shown in Fig. 19, the base-station apparatus 100 of the present embodiment can communicate with a mobile station 200 (MS), which is a user terminal in possession of a user, through various paths (a path 1 and a path 2) via, for examples, buildings 300A and 300B.

The receiving section 103a of the baseband signal processing section 103 in the present embodiment has a configuration that is analogous to the CDMA reception apparatus 10 in the first embodiment illustrated in Fig. 4, and executes reception-timing detection processing, involving same-path deletion, in the same manner as the first embodiment.

An example of the same-path determination according to the present embodiment (and the first embodiment) will now be described.

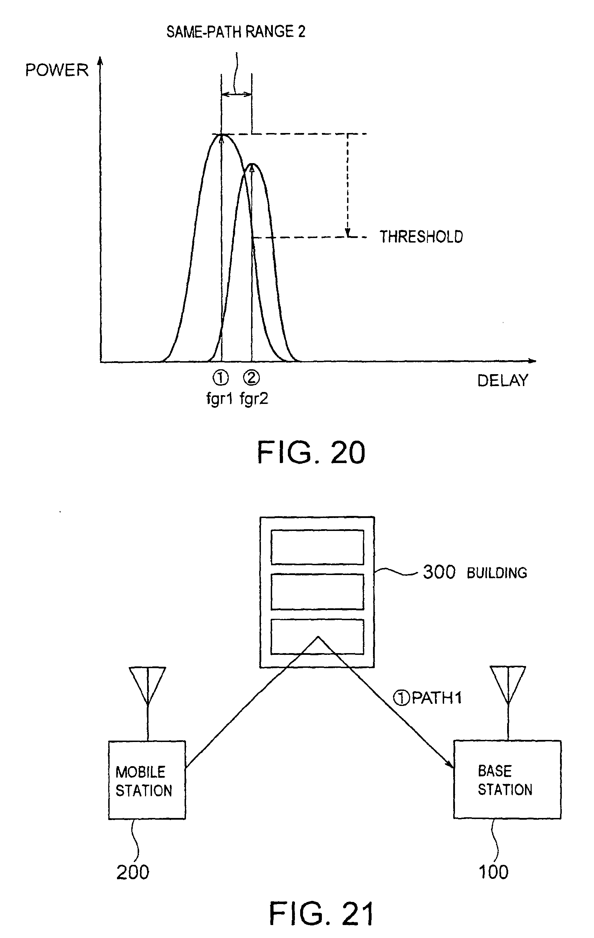

Fig. 20 is a graph showing one example of path levels in the present embodiment. Two fingers are detected so as to correspond to the respective paths, i.e., the path 1 and the path 2 shown in Fig. 19. In the case of Fig. 20, the center peak timing of each finger is located in the range of the same-path range 2, and the peak level of one fgr 2 is higher than a threshold defined by the peak level of the other fgr 1 having a higher peak. Thus, both the fingers are determined to be different paths from each other. Accordingly, both the fingers are valid fingers and thus are not deleted.

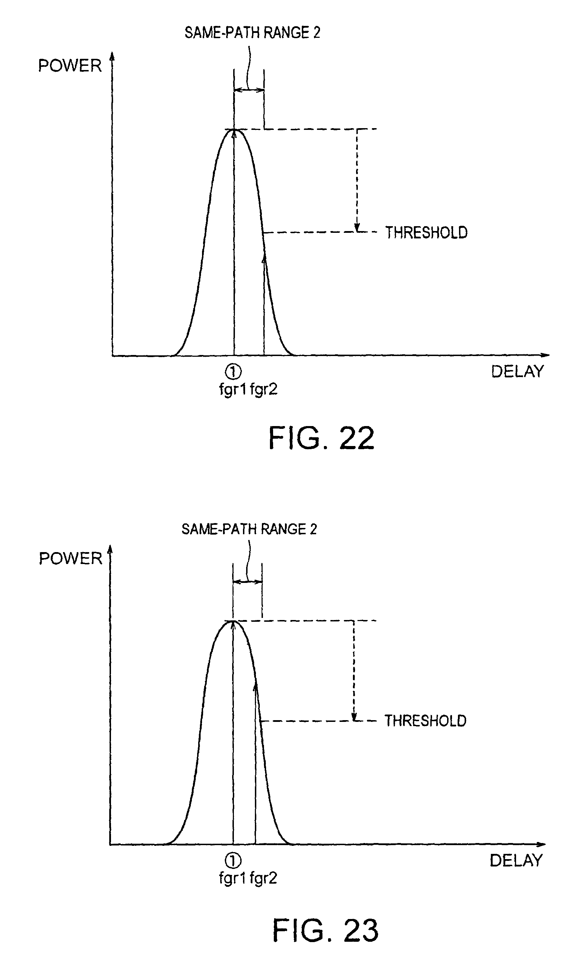

Fig. 21 is a view showing another example of path channels in the present embodiment and Fig. 22 is a graph showing one example of the path levels in the case of Fig. 21.

Referring to Fig. 22, two fingers are also detected in this case and the center peak timing of each finger is located in the range of the same-path range 2. In this case, however, since the peak level of one fgr 2 is lower than a threshold that is defined by the peak level of the other fgr 1 having a higher peak level, both the fingers are determined to be the same path. Thus, the fgr 2 having a lower peak level is deleted.

A description is now given of one example of the same-path determination in the second embodiment of the present invention.

As shown in the example of Fig. 23, now suppose that two fingers are detected. First, it is detected that the center peak timing of each finger is in the range of the same-path range 2 and the peak level of one fgr 2 is higher than a threshold defined by the peak level of the other fgr 1 having a higher peak level. As a result, it is determined that both the fingers are likely to be different paths. In this case, in the present embodiment, a determination is further made as to whether or not the paths are the same based on the vectors of correlation values of the fingers.

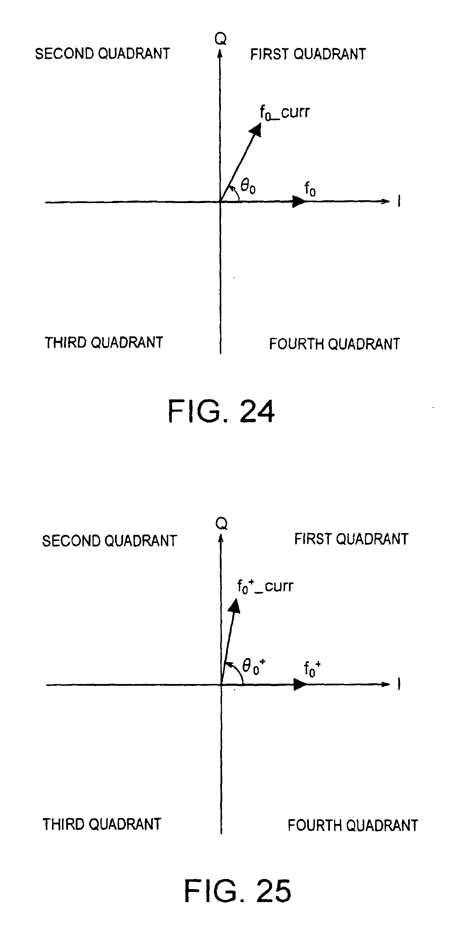

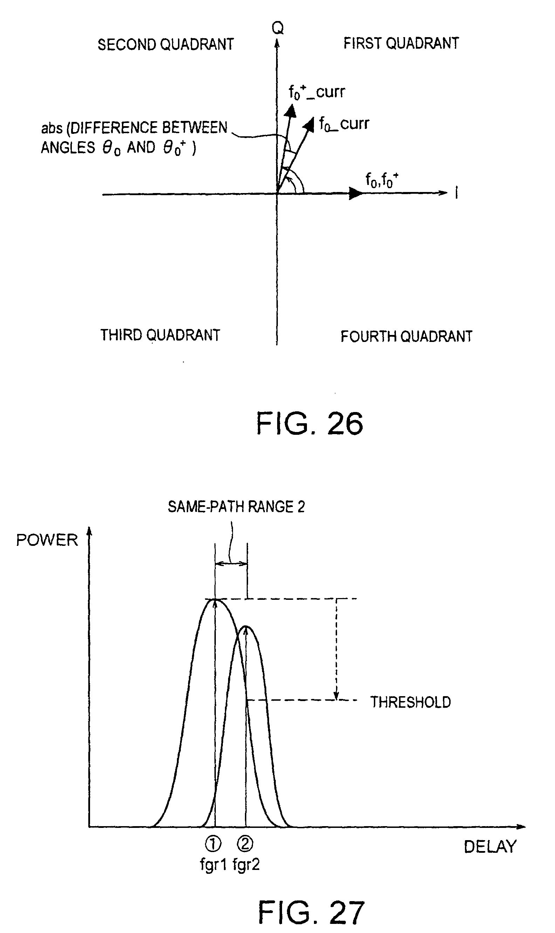

That is, an angle $\theta 0$ (Fig. 24) defined by the previous and current correlation values f0_curr and f0 of the fgr 1 and an angle $\theta +$ (Fig. 25) defined by the previous and current correlation values f0+_curr and f0+ of the fgr 2 are determined, and based on a difference (Fig. 26) between the angles, a determination is made as to whether the paths are the same. In the present embodiment, since the angle difference is smaller than a specified threshold, it is determined that the fingers, i.e., the fgr 1 and the fgr 2, are the same.

Examples shown in Figs. 27 to 30 are analogous to those shown in Fig. 23 to 26. As shown in the example of Fig. 27, now suppose that two fingers are detected. In the same manner as the example of Fig. 23, it is determined that both the fingers are likely to be different paths. Thus, a determination is made as to whether or not the paths are the same based on the vectors of correlation values of the fingers.

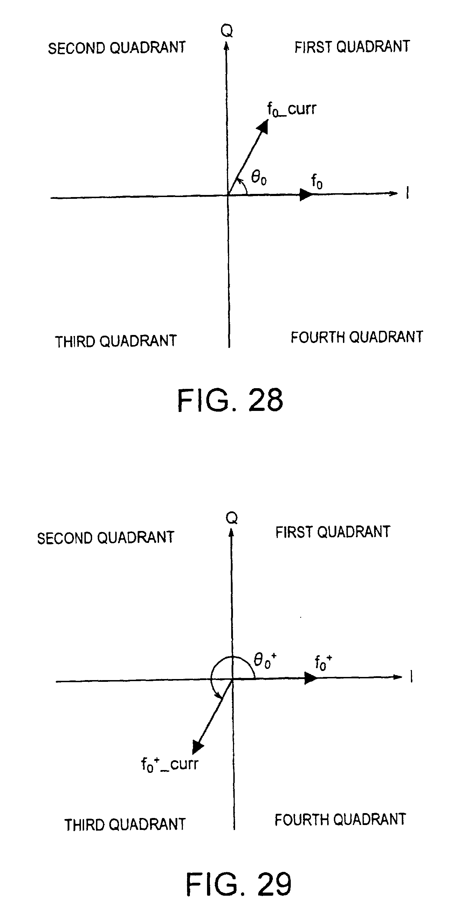

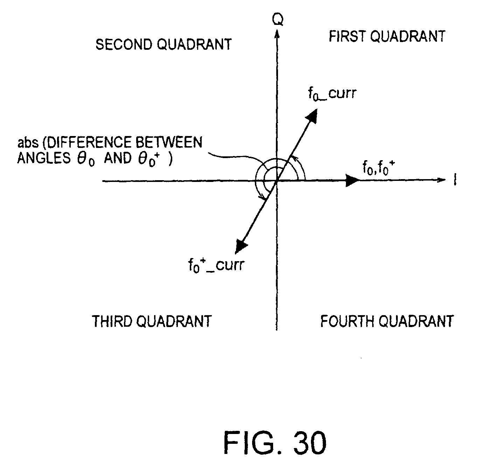

That is, an angle $\theta 0$ (Fig. 28) defined by the previous and current correlation values f0_curr and f0 of the fgr 1 and an angle $\theta +$ (Fig. 29) defined by the previous and current correlation values f0+_curr and f0+ of the fgr 2 are determined, and based on a difference (Fig. 30) between the angles, a determination is made as to whether the paths are the same. In the present embodiment, since the angle difference is larger than a specified threshold, it is determined that the fingers, i.e., the fgr 1 and the fgr 2, are different paths from each other.

In the above-described embodiments and examples, the descriptions are given of an exemplary system in which the ranges (the first and second detection ranges) for detecting same paths in the protection processing and the same-path deletion processing are set as the specified ranges (the same-path ranges 1 and 2) located before and after the path timing of the center protection path (or the peak timing of the center peak). The embodiments and examples, however, are not limited thereto.

That is, other than the above-described "protection path timing $\pm$ the same-path range 1 (or 2)", the present invention can equally be practiced in a case in which different ranges are set before and after a protection path timing so as to have (protection path timing - a same-path range A) to (protection path timing + a same-path range B).

Although the present invention has been described in conjunction with the preferred embodiments and examples, the present invention is not necessarily limited to the above-described embodiments and examples and can be practiced with various modifications within the sprit and scope of the present invention.

As described above, the CDMA reception apparatus of the present invention, the base station therefor, and the method for detecting reception timings for despreading reception signals thereof achieve the following advantages.

In the conventional same-path determination method, when the range (the first detection range) for detecting same paths in the protection processing is set to be small, there are problems as follows. When individual paths are close to each other in a high-speed fading environment, which is often found in urban areas, the passes are easily separated, thereby improving the characteristic. However, when individual paths are far apart from each other in a low-speed fading environment, which is often found in suburban areas, sidelobes are easily received and are used for rake combining, thus deteriorating the characteristic.

Conversely, in the conventional same-path determination method, when the same-path range 1 used in the protection processing is set to be large, there are problems as follows. When individual paths are far apart from each other in a low-speed fading environment, which is often found in suburban areas, the characteristic improves because of difficulty of receiving sidelobes. However, when individual paths are close to each other in a high-speed fading environment, which is often found in urban areas, a path that can be a different path even with a small fluctuation is determined to be the same path, thus deteriorating the characteristic.

According to the present invention, for such various propagation environments, the reception characteristic can be equally improved in any case.

This is because the same-path deletion processing is added after the protection processing to detect a protection path that is a sidelobe of another protection as an invalid finger path so that only the reception timings of valid finger paths that are protection paths other than the invalid finger path are sent to the finger section.

In the same-path deletion processing, for each protection path, a determination is made as to whether or not another protection path exists in a specified range (the second detection range) in the vicinity of the timing of each protection path.

Then, when another protection path exists, the level of each protection path is compared. When the protection path level of a detected protection path is equal to or higher than a threshold (= a center protection path level $\times$ a coefficient), the path is determined to be a different path. When the protection path level of a detected protection path is smaller than a threshold (= a center protection path level $\times$ a coefficient), the path is determined to be the same path (where the coefficient $\leqq 1.0$). This allows for appropriate detection of a protection path that is the same path of a sidelobe of another protection path.

Then, a path determined to be the same path is designated as an invalid finger path and only a protection path determined to be a different path is designated as a valid finger path, and the reception timing of the valid finger path is output to the finger section. As a result, even when the range for detecting a same path in the protection processing is set to be small, a protection path that appears to be a sidelobe can be detected and be designated as an invalid finger path in the same-path deletion processing.

In addition, the same-path determination processing is divided into the protection processing and the same-path deletion processing. As a result, even when a path is mistakenly designated as an invalid finger path because of an accidental drop at a certain point due to fading or the like, the path is not deleted from protection paths, thus preventing the found protection path from being missed.

**Claims**

1. A CDMA reception apparatus (10) for receiving CDMA-system signals as reception signals (a), the CDMA reception apparatus being **characterized by** comprising:

   reception-timing detecting means (12) for detecting reception timings (b) for despreading the reception signals; and
   detection processing means (11) for performing detection processing by despreading the reception signals in accordance with the reception timings detected by the reception-timing detecting section,

   wherein the reception-timing detecting means (12) comprises a same-path deletion processing section (35, 35a) for, based on information of path timings (i) and path levels (k) of protection paths that are paths existing at present time, designating specific protection paths, each forming a sidelobe of another protection path of the protection paths, as invalid paths and for extracting protection paths other than the invalid paths as valid paths, and wherein the same-path deletion processing section outputs the reception timings of the valid paths to the detection processing means (11) as the reception timings (b) for despreading the reception signals.

2. The CDMA reception apparatus according to claim 1, **characterized in that**, in the processing for detecting the invalid paths each forming a sidelobe of another protection path of the protection paths, the same-path deletion processing section (35) sequentially detects the specific protection paths as the invalid paths from the protection paths, each specific protection path having a path timing in a predetermined range from the path timing (i) of the another protection path and having a path level that is lower than a threshold specified based on the path level (k) of the another protection path.

3. The CDMA reception apparatus according to claim 1, **characterized in that**, in the processing for detecting the invalid paths each forming a sidelobe of another protection path of the protection paths, the same-path deletion processing section (35a) extracts each invalid path in accordance with information of the path timing (i) and the path level (k) of each protection path and information of correlation values (n, o) of each protection path.

4. The CDMA reception apparatus according to claim 3, **characterized in that**, in the processing for detecting the invalid paths each forming a sidelobe of another protection path of the protection paths, the same-path deletion processing section (35a) sequentially detects the specific protection paths as the invalid paths from the protection paths, wherein the specific protection paths include protection paths, each having a path timing in a predetermined range from the path timing (i) of the another protection path and having a path level that is lower than a threshold specified based on the path level (k) of the another protection path, and protection paths, each having a path timing in a predetermined range from the path timing (i) of the another protection path, having a path level that is higher than a threshold specified based on the path level (k) of the another protection path, and having a smaller difference between an angle defined by vector rotations of correlation values (l, m) and an angle defined by vector rotations of correlation values (n, o) of the another protection path than a specified value.

5. The CDMA reception apparatus according to claim 2, **characterized in that** the threshold specified based on the path level of the another protection path is a value obtained by multiplying the value of the path level of the another protection path by a positive coefficient of 1.0 or less.

6. The CDMA reception apparatus according to claim 4, **characterized in that** the threshold specified based on the path level of the another protection path is a value obtained by multiplying the value of the path level of the another protection path by a positive coefficient of 1.0 or less.

7. The CDMA reception apparatus according to claim 1, **characterized in that** the reception-timing detecting means (12) comprises:

   a protection processing memory section (34) for recording information (i, j, k) of the protection paths;
   means (31, 32) for sequentially executing processing for detecting paths from the reception signals; and
   a protection processing section (33) for re-determining the protection paths that are paths existing at present time in accordance with information (g, h) of the respective paths detected by the path detection processing and information (i, j, k) of the respective protection paths recorded in the protection processing memory section,

   wherein the same-path deletion processing section (35, 35a) extracts the valid paths from the protection paths re-determined by the protection processing section.

8. The CDMA reception apparatus according to claim 2, **characterized in that** the reception-timing detection means (12) comprises:

   a protection processing memory section (34) for recording information (i, j, k) of the protection paths;
   means (31, 32) for sequentially executing processing for detecting paths from the reception signals; and
   a protection processing section (33) for re-determining the protection paths that are paths existing at present time in accordance with information (g, h) of the respective paths detected by the path detection processing and information (i, j, k) of the respective protection paths recorded in the protection processing memory section,

   wherein the same-path deletion processing section (35) extracts the valid paths from the protection paths re-determined by the protection processing section.

9. The CDMA reception apparatus according to claim 3, **characterized in that** the reception-timing detection means (12) comprises:

   a protection processing memory section (34) for recording information (i, j, k) of the protection paths;
   means (31, 32) for sequentially executing processing for detecting paths from the reception signals; and
   a protection processing section (33) for re-determining the protection paths that are paths existing at present time in accordance with information (g, h) of the respective paths detected by the path detection processing and information (i, j, k) of the respective protection paths recorded in the protection processing memory section,

   wherein the same-path deletion processing section (35a) extracts the valid paths from the protection paths re-determined by the protection processing section.

10. The CDMA reception apparatus according to claim 4, **characterized in that** the reception-timing detection means (12) comprises:

   a protection processing memory section (34) for recording information (i, j, k) of the protection paths;
   means (31, 32) for sequentially executing processing for detecting paths from the reception signals; and
   a protection processing section (33) for re-determining the protection paths that are paths existing at present time in accordance with information (g, h) of the respective paths detected by the path detection processing and information (i, j, k) of the respective protection paths recorded in the protection processing memory section,

   wherein the same-path deletion processing section (35a) extracts the valid paths from the protection paths re-determined by the protection processing section.

**11.** The CDMA reception apparatus according to claim 5, **characterized in that** the reception-timing detection means (12) comprises:

a protection processing memory section (34) for recording information (i, j, k) of the protection paths;
means (31, 32) for sequentially executing processing for detecting paths from the reception signals; and
a protection processing section (33) for re-determining the protection paths that are paths existing at present time in accordance with information (g, h) of the respective paths detected by the path detection processing and information (i, j, k) of the respective protection paths recorded in the protection processing memory section,

wherein the same-path deletion processing section (35) extracts the valid paths from the protection paths re-determined by the protection processing section.

**12.** The CDMA reception apparatus according to claim 6, **characterized in that** the reception-timing detection means (12) comprises:

a protection processing memory section (34) for recording information (i, j, k) of the protection paths;
means (31, 32) for sequentially executing processing for detecting paths from the reception signals; and
a protection processing section (33) for re-determining the protection paths that are paths existing at present time in accordance with information (g, h) of the respective paths detected by the path detection processing and information (i, j, k) of the respective protection paths recorded in the protection processing memory section,

wherein the same-path deletion processing section (35a) extracts the valid paths from the protection paths re-determined by the protection processing section.

**13.** A CDMA reception apparatus (10) for receiving CDMA-system signals as reception signals (a), the CDMA reception apparatus being **characterized by** comprising:

reception-timing detecting means (12) for detecting reception timings (b) for despreading the reception signals; and
detection processing means (11) for performing detection processing by despreading the reception signals in accordance with the reception timings detected by the reception-timing detecting section,

wherein the reception-timing detecting means (12) comprises:

a protection processing memory section (34) for recording information (i, j, k) of protection paths that are paths existing at present time;
a peak detection processing section (31 b) for sequentially detecting peak timings from the reception signals, the peak timings being timings indicating peaks of the levels of the reception signals;
means for detecting, as paths for the reception signals, peak timings having levels that are equal to or higher than a specified value from the peak timings detected by the peak detection processing section; and
a protection processing section (33) for re-determining the protection paths in accordance with information (g, h) of the detected paths and information (i, j, k) of the respective protection paths recorded in the protection processing memory section and for outputting the reception timings of the determined protection paths to the detection processing means (11) as the reception timings (b) for despreading the reception signals, and

wherein the peak detection processing section (31 b) outputs, of the peak timings detected from the reception signals, peak timings other than peak timings each forming a sidelobe of another peak timing.

**14.** The CDMA reception apparatus according to claim 13, **characterized in that**, in the processing for detecting the peak timings, the peak detection processing section (31 a) detects, of the peak timings detected from the reception timings, the peak timings in a first detection range, which is a specified range in the vicinity of another peak timing having a higher level and excludes the detected peak timings; detects the peak timings that are in a second detection range, which is a specified range in the vicinity of another peak timing a having higher level, and that have levels lower than a threshold specified based on the level of the another peak timing and excludes the detected peak timings; and outputs the peak timings other than the excluded peak timings.

**15.** The CDMA reception apparatus according to claim 14, **characterized in that** the threshold specified based on the level of the another peak timing is a value obtained by multiplying the value of the level of the another peak timing by a positive coefficient of 1.0 or less.

16. A method for, in a CDMA reception apparatus (10) for receiving CDMA-system signals as reception signals (a), detecting reception timings for despreading the reception signals, the method **characterized by** comprising:

a same-path deletion processing step (S44) of detecting, in accordance with information of path timings (i) and path levels (k) of protection paths that are paths existing at present time, specific protection paths each forming a sidelobe of another protection path of the protection paths as invalid paths, extracting the protection paths other than the invalid paths as valid paths, and detecting the reception timings of the valid paths as the reception timings (b) for despreading the reception signals.

17. The method according to claim 16, **characterized in that**, in the processing for detecting the invalid paths each forming a sidelobe of another protection path of the protection paths in the same-path deletion processing step (S44), the specific protection paths are sequentially detected as the invalid paths from the protection paths, each specific protection path having a path timing in a predetermined range from the path timing (i) of the another protection path and having a path level that is lower than a threshold specified based on the path level (k) of the another protection path.

18. The method according to claim 16, **characterized in that**, in the processing for detecting the invalid paths each forming a sidelobe of another protection path of the protection paths in the same-path deletion processing step (S44), each invalid path is extracted in accordance with information of the path timing (i) and the path level (k) of each protection path and information of correlation values (n, o) of each protection path.

19. The method according to claim 18, **characterized in that**, in the processing for detecting the invalid paths each forming a sidelobe of another protection path of the protection paths in the same-path deletion processing step (S44), the specific protection paths are sequentially detected as the invalid paths from the protection paths, wherein the specific protection paths include protection paths, each having a path timing in a predetermined range from the path timing (i) of the another protection path and having a path level that is lower than a threshold specified based on the path level (k) of the another protection path, and protection paths, each having a path timing in a predetermined range from the path timing (i) of the another protection path, having a path level that is higher than a threshold specified based on the path level (k) of the another protection path, and having a smaller difference between an angle defined by vector rotations of correlation values (l, m) and an angle defined by vector rotations of correlation values (n, o) of the another protection path than a specified value.

20. The method according to claim 17, **characterized in that** the threshold specified based on the path level of the another protection path is a value obtained by multiplying the value of the path level of the another protection path by a positive coefficient of 1.0 or less.

21. The method according to claim 19, **characterized in that** the threshold specified based on the path level of the another protection path is a value obtained by multiplying the value of the path level of the another protection path by a positive coefficient of 1.0 or less.

22. The method according to claim 16, **characterized by** comprising:

a step (34) of recording and referring to information (i, j, k) of the protection paths;
a step (S41, S42) of sequentially executing processing for detecting paths from the reception signals; and
a protection processing step (S43) of re-determining the protection paths that are paths existing at present time in accordance with information (g, h) of the respective paths detected by the path detection processing and information (i, j, k) of the recorded protection paths,

wherein, in the same-path deletion processing step (S44), the valid paths are extracted from the protection paths re-determined in the protection processing step.

23. The method according to claim 17, **characterized by** comprising:

a step (34) of recording and referring to information (i, j, k) of the protection paths;
a step (S41, S42) of sequentially executing processing for detecting paths from the reception signals; and
a protection processing step (S43) of re-determining the protection paths that are paths existing at present time in accordance with information (g, h) of the respective paths detected by the path detection processing and information (i, j, k) of the recorded protection paths,

wherein, in the same-path deletion processing step (S44), the valid paths are extracted from the protection paths re-determined in the protection processing step.

24. The method according to claim 18, **characterized by** comprising:

a step (34) of recording and referring to information (i, j, k) of the protection paths;
a step (S41, S42) of sequentially executing processing for detecting paths from the reception signals; and
a protection processing step (S43) of re-determining the protection paths that are paths existing at present time in accordance with information (g, h) of the respective paths detected by the path detection processing and information (i, j, k) of the recorded protection paths,

wherein, in the same-path deletion processing step (S44), the valid paths are extracted from the protection paths re-determined in the protection processing step.

25. The method according to claim 19, **characterized by** comprising:

a step (34) of recording and referring to information (i, j, k) of the protection paths;
a step (S41, S42) of sequentially executing processing for detecting paths from the reception signals; and
a protection processing step (S43) of re-determining the protection paths that are paths existing at present time in accordance with information (g, h) of the respective paths detected by the path detection processing and information (i, j, k) of the recorded protection paths,

wherein, in the same-path deletion processing step (S44), the valid paths are extracted from the protection paths re-determined in the protection processing step.

26. The method according to claim 20, **characterized by** comprising:

a step (34) of recording and referring to information (i, j, k) of the protection paths;
a step (S41, S42) of sequentially executing processing for detecting paths from the reception signals; and
a protection processing step (S43) of re-determining the protection paths that are paths existing at present time in accordance with information (g, h) of the respective paths detected by the path detection processing and information (i, j, k) of the recorded protection paths,

wherein, in the same-path deletion processing step (S44), the valid paths are extracted from the protection paths re-determined in the protection processing step.

27. The method according to claim 21, **characterized by** comprising:

a step (34) of recording and referring to information (i, j, k) of the protection paths;
a step (S41, S42) of sequentially executing processing for detecting paths from the reception signals; and
a protection processing step (S43) of re-determining the protection paths that are paths existing at present time in accordance with information (g, g) of the respective paths detected by the path detection processing and information (i, j, k) of the recorded protection paths,

wherein, in the same-path deletion processing step (S44), the valid paths are extracted from the protection paths re-determined in the protection processing step.

28. A base station (100) having receiving means (102a) for receiving CDMA-system signals as reception signals (a) and demodulating means (103a) for performing data demodulation on the reception signals, the base station being **characterized in that** the demodulating means (103a) comprises:

reception-timing detecting means (12) for receiving reception timings (b) for despreading the reception signals; and
detection processing means (11) for performing detection processing by despreading the reception signals in accordance with the reception timings detected by the reception-timing detecting section,

wherein the reception-timing detecting means (12) comprises a same-path deletion processing section (35, 35a) for, based on information of path timings (i) and path levels (k) of protection paths that are paths existing at present time, designating specific protection paths, each forming a sidelobe of another protection path of the protection paths, as invalid paths and for extracting protection paths other than the invalid paths as valid paths, and wherein the same-path deletion processing section outputs the reception timings of the valid paths to the detection processing means as the reception timings (b) for despreading the reception signals.

29. The base station according to claim 28, **character-**

**ized in that**, in the processing for detecting the invalid paths each forming a sidelobe of another protection path of the protection paths, the same-path deletion processing section (35) sequentially detects the specific protection paths as the invalid paths from the protection paths, each specific protection path having a path timing in a predetermined range from the path timing (i) of the another protection path and having a path level that is lower than a threshold specified based on the path level (k) of the another protection path.

30. The base station according to claim 28, **characterized in that**, in the processing for detecting the invalid paths each forming a sidelobe of another protection path of the protection paths, the same-path deletion processing section (35a) extracts each invalid path in accordance with information of the path timing (i) and the path level (k) of each protection path and information of correlation values (n, o) of each protection path.

31. The base station according to claim 30, **characterized in that**, in the processing for detecting the invalid paths each forming a sidelobe of another protection path of the protection paths, the same-path deletion processing section (35a) sequentially detects the specific protection paths as the invalid paths from the protection paths, wherein the specific protection paths include protection paths, each having a path timing in a predetermined range from the path timing (i) of the another protection path and having a path level that is lower than a threshold specified based on the path level (k) of the another protection path, and protection paths, each having a path timing in a predetermined range from the path timing (i) of the another protection path, having a path level that is higher than a threshold specified based on the path level (k) of the another protection path, and having a smaller difference between an angle defined by vector rotations of correlation values (l, m) and an angle defined by vector rotations of correlation values (n, o) of the another protection path than a specified value.

32. The base station according to claim 29, **characterized in that** the threshold specified based on the path level of the another protection path is a value obtained by multiplying the value of the path level of the another protection path by a positive coefficient of 1.0 or less.

33. The base station according to claim 31, **characterized in that** the threshold specified based on the path level of the another protection path is a value obtained by multiplying the value of the path level of the another protection path by a positive coefficient of 1.0 or less.

34. The base station according to claim 28, **characterized in that** the reception-timing detecting means (12) comprises:

   a protection processing memory section (34) for recording information (i, j, k) of the protection paths;
   means (31, 32) for sequentially executing processing for detecting paths from the reception signals; and
   a protection processing section (33) for re-determining the protection paths that are paths existing at present time in accordance with information (g, h) of the respective paths detected by the path detection processing and information (i, j, k) of the respective protection paths recorded in the protection processing memory section,

   wherein the same-path deletion processing section (35, 35a) extracts the valid paths from the protection paths re-determined by the protection processing section.

35. The base station according to claim 29, **characterized in that** the reception-timing detection means (12) comprises:

   a protection processing memory section (34) for recording information (i, j, k) of the protection paths;
   means (31, 32) for sequentially executing processing for detecting paths from the reception signals; and
   a protection processing section (33) for re-determining the protection paths that are paths existing at present time in accordance with information (g, h) of the respective paths detected by the path detection processing and information (i, j, k) of the respective protection paths recorded in the protection processing memory section,

   wherein the same-path deletion processing section (35) extracts the valid paths from the protection paths re-determined by the protection processing section.

36. The base station according to claim 30, **characterized in that** the reception-timing detection means (12) comprises:

   a protection processing memory section (34) for recording information (i, j, k) of the protection paths;
   means (31, 32) for sequentially executing processing for detecting paths from the reception signals; and

a protection processing section (33) for re-determining the protection paths that are paths existing at present time in accordance with information (g, h) of the respective paths detected by the path detection processing and information (i, j, k) of the respective protection paths recorded in the protection processing memory section,

wherein the same-path deletion processing section (35a) extracts the valid paths from the protection paths re-determined by the protection processing section.

37. The base station according to claim 31, **characterized in that** the reception-timing detection means (12) comprises:

a protection processing memory section (34) for recording information (i, j, k) of the protection paths;
means (31, 32) for sequentially executing processing for detecting paths from the reception signals; and
a protection processing section (33) for re-determining the protection paths that are paths existing at present time in accordance with information (g, h) of the respective paths detected by the path detection processing and information (i, j, k) of the respective protection paths recorded in the protection processing memory section,

wherein the same-path deletion processing section (35a) extracts the valid paths from the protection paths re-determined by the protection processing section.

38. The base station according to claim 32, **characterized in that** the reception-timing detection means (12) comprises:

a protection processing memory section (34) for recording information (i, j, k) of the protection paths;
means (31, 32) for sequentially executing processing for detecting paths from the reception signals; and
a protection processing section (33) for re-determining the protection paths that are paths existing at present time in accordance with information (g, h) of the respective paths detected by the path detection processing and information (i, j, k) of the respective protection paths recorded in the protection processing memory section,

wherein the same-path deletion processing section (35) extracts the valid paths from the protection paths re-determined by the protection processing section.

39. The CDMA reception apparatus according to claim 33, **characterized in that** the reception-timing detection means (12) comprises:

a protection processing memory section (34) for recording information (i, j, k) of the protection paths;
means (31, 32) for sequentially executing processing for detecting paths from the reception signals; and
a protection processing section (33) for re-determining the protection paths that are paths existing at present time in accordance with information (g, h) of the respective paths detected by the path detection processing and information (i, j, k) of the respective protection paths recorded in the protection processing memory section,

wherein the same-path deletion processing section (35a) extracts the valid paths from the protection paths re-determined by the protection processing section.

40. A base station (100) having receiving means (102a) for receiving COMA-system signals as reception signals (a) and demodulating means (103a) for performing data demodulation on the reception signals, the base station being **characterized in that** the demodulating means (103a) comprises:

reception-timing detecting means (12) for detecting reception timings (b) for despreading the reception signals; and
detection processing means (11) for performing detection processing by despreading the reception signals in accordance with the reception timings detected by the reception-timing detecting section,

wherein the reception-timing detecting means (12) comprises:

a protection processing memory section (34) for recording information (i, j, k) of protection paths that are paths existing at present time;
a peak detection processing section (31 b) for sequentially detecting peak timings from the reception signals, the peak timings being timings indicating peaks of the levels of the reception signals;
means (32) for detecting, as paths for the reception signal, peak timings having levels that are equal to or higher than a specified value from the peak timings detected by the peak detection processing section; and

a protection processing section (33) for re-determining the protection paths in accordance with information (g, h) of the detected paths and information (i, j, k) of the respective protection paths recorded in the protection processing memory section and for outputting the reception timings of the determined protection paths to the detection processing means (11) as the reception timings (b) for despreading the reception signals, and

wherein the peak detection processing section (31 b) outputs, of the peak timings detected from the reception signals, peak timings other than peak timings each forming a sidelobe of another peak timing.

41. The base station according to claim 40, **characterized in that**, in the processing for detecting the peak timings, the peak detection processing section (31b) detects, of the peak timings detected from the reception timings, the peak timings in a first detection range, which is a specified range in the vicinity of another peak timing having a higher level and excludes the detected peak timings; detects the peak timings that are in a second detection range, which is a specified range in the vicinity of another peak timing having a higher level, and that have levels lower than a threshold specified based on the level of the another peak timing and excludes the detected peak timings; and outputs the peak timings other than the excluded peak timings.

42. The base station according to claim 41, **characterized in that** the threshold specified based on the level of the another peak timing is a value obtained by multiplying the value of the level of the another peak timing by a positive coefficient of 1.0 or less.

FIG. 1

SPEED 3[km／h]

power

Path1
0dB

Path2
-10dB

delay

dalay[ns]
Path1: 0
Path2: 976

# FIG. 2

SPEED 120[km/h]

Power

Path1
0dB

Path2
-3dB

Path3
-6dB

Path4
-9dB

delay

delay [ns]
Path1: 0
Path2: 260
Path3: 521
Path4: 781

# FIG. 3

EP 1 450 496 A1

**FIG. 4**

LEVEL

THRESHOLD

THRESHOLD

SAME-PATH RANGE 2
(> SAME-PATH RANGE 1)

×

TIMING

finger1
(VALID
FINGER
PATH)

finger3
(VALID
FINGER
PATH)

finger2
(VALID
FINGER
PATH)

finger4
(INVALID
FINGER
PATH)

PATH LEVEL OF finger 3 ≧ THRESHOLD
finger 1 AND finger 3 ARE DETERMINED
TO BE DIFFERENT PATHS

PATH LEVEL OF finger 4 < THRESHOLD
finger 2 AND figer 4 ARE DETERMINED TO
BE THE SAME PATHS

# FIG. 5

12

SEARCHER SECTION    21

DELAY PROFILE
CALCULATING SECTION    22    c    23    d

a

22 (1)    CORRE-LATOR    ADDER    23 (1)
22 (2)    CORRE-LATOR    ADDER    23 (2)
22 (3)    CORRE-LATOR    ADDER    23 (3)
22 (4)    CORRE-LATOR    ADDER    23 (4)
22 (5)    CORRE-LATOR    ADDER    23 (5)
22 (6)    CORRE-LATOR    ADDER    23 (6)

CORRE-LATOR    ADDER
22 (m-1)    CORRE-LATOR    ADDER    23 (m-1)

22 (m)    23 (m)

SEARCHING DELAY
CIRCUIT    26

SPREADING-CODE
GENERATOR    25

24
PATH
CONTROL
SECTION

TO 11

b

FIG. 6

FIG. 7

EP 1 450 496 A1

START

PEAK DETECTION
PROCESSING — S41

THRESHOLD
PROCESSING — S42

PROTECTION
PROCESSING — S43

SAME-PATH
DELETION
PROCESSING — S44

END

FIG. 8

EXAMPLE: CASE FOR SELECTING "3 peaks"

FIG. 9

LEVEL

FingerPath (PROTECTION PATH
=PATH PREVIOUSLY FOUND)

FingerPath (PROTECTION PATH
=PATH PREVIOUSLY FOUND)

SAME-PATH RANGE 1

SearchPeak
(PATH CURRENTLY FOUND)

SearchPeak
(PATH CURRENTLY FOUND)

finger1
(PATH DETECTED)

finger2
(NO PATH DETECTED)

TIMING

FIG. 10

EXAMPLE: IN THE CASE OF THE NUMBER OF
BACKWARD PROTECTION STAGES =3 AND
THE NUMBER OF FORWARD PROTECTION STAGES =3

72        73

1ST
BACKWARD
PROTECTION
STAGE

2ND
BACKWARD
PROTECTION
STAGE

74

START

IDLE
STATE

ACTIVE
STATE

71

2ND
FORWARD
PROTECTION
STAGE

1ST
FORWARD
PROTECTION
STAGE

77

76        75

→ PATH DETECTED

--→ NO PATH DETECTED

78

FIG. 11

START

for(i=0  i < THE NUMBER OF
PROTECTION PATHS; i++)

S81

PROTECTION
PATH [i] IN NON-IDLE
STATE?

NO

S83

DESIGNATE
PROTECTION PATH [i] AS
INVALID FINGER PATH

YES

S82

DESIGNATE PROTECTION PATH
[i] AS VALUD FINGER PATH

i-loop end

for (i=0, i<THE NUMBER OF
PROTECTION PATHS; i++)

S84

IS PROTECTION PATH [i]
INVALID FINGER PATH?

YES

NO

for (j=0, j < THE NUMBER OF
PROTECTION PATHS; j++)

S85

IS abs
(PROTECTION PATH TIMING [i] -
PROTECTION PATH TIMING [j]) ≤
SAME-PATH RANGE 2?

NO

YES

S86

PROTECTION PATH
LEVEL [j] ≧ PROTECTION
PATH LEVEL [i] ×
COEFFICIENT?

NO

S88

S87

YES

S89

DESIGNATE
PROTECTION PATH [i] AS
INVALID FINGER PATH

j-loop end

i-loop end

END

FIG. 12

EP 1 450 496 A1

24a

I,m

FROM 21

PATH CONTROL SECTION

TO 11

d

FROM 21

| 31 | e,f | 32 | g,h | 33 | i,j,k | 35a |
|---|---|---|---|---|---|---|

PEAK DETECTION PROCESSING SECTION

THRESHOLD PROCESSING SECTION

PROTECTION PROCESSING SECTION

SAME-PATH DELETION PROCESSING SECTION

b

i,j,k

n,o

34

PROTECTION PROCESSING MEMORY SECTION

i — PROTECTION PATH TIMING

j — PROTECTION PATH STATE

k — PROTECTION PATH LEVEL

36

SAME-PATH DELETION PROCESSING MEMORY SECTION

PROTECTION PATH CORRELATION (I, Q)

n

CORRELATION (I,Q) OF TIMING OF PROTECTION PATH ± SAME-PATH RANGE 2

o

FIG. 13

FIG. 14

FIG. 15

LEVEL

peak"1"

peak"2"

THRESHOLD

SAME-PATH
RANGE 1

SAME-PATH RANGE 2
(>SAME-PATH RANGE 1)

tmg3          tmg1          tmg2                              TIMING
(NOT SELETED   (SELECTED     (SELECTED
AS PEAK)       AS PEAK)      AS PEAK)

PATH LEVEL OF tmg2 ≧ THRESHOLD          PATH LEVEL OF tmg3 < THRESHOLD
tmg1 AND tmg2 ARE DETERMINED TO BE      tmg3 AND tmg1 ARE DETERMINED TO BE
DIFFERENT PATHS                          THE SAME PATH

# FIG. 16

FIG. 17

FIG. 18

300A BUILDING

①PATH1

MOBILE STATION

BASE STATION

200

②PATH2

100

300B BUILDING

FIG. 19

FIG. 20

FIG. 21

SAME-PATH RANGE 2

POWER

THRESHOLD

DELAY

①
fgr1 fgr2

## FIG. 22

SAME-PATH RANGE 2

POWER

THRESHOLD

DELAY

①
fgr1 fgr2

## FIG. 23

FIG. 24

FIG. 25

Q

SECOND QUADRANT

FIRST QUADRANT

$f_0^+$_curr

$f_0$_curr

abs (DIFFERENCE BETWEEN
ANGLES $\theta_0$ AND $\theta_0^+$ )

$f_0, f_0^+$

I

THIRD QUADRANT

FOURTH QUADRANT

## FIG. 26

SAME-PATH RANGE 2

POWER

THRESHOLD

① ②
fgr1 fgr2

DELAY

## FIG. 27

FIG. 28

FIG. 29

FIG. 30

## INTERNATIONAL SEARCH REPORT

| International application No. |
| --- |
| PCT/JP02/12208 |

A. CLASSIFICATION OF SUBJECT MATTER
    Int.Cl⁷ H04B1/707, H04Q7/38

According to International Patent Classification (IPC) or to both national classification and IPC

B. FIELDS SEARCHED

Minimum documentation searched (classification system followed by classification symbols)
    Int.Cl⁷ H04B1/69-1/713, H04J13/00-13/06, H04Q7/38

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2000-278177 A (Sanyo Electric Co., Ltd.), 06 October, 2000 (06.10.00), Full text; Figs. 5, 6 (Family: none) | 1,3,7,9,13, 16,18,22,24, 28,30,34,36, 40 |
| A | | 2,4-6,8, 10-12,14,15, 17,19-21,23, 25-27,29, 31-33,35, 37-39,41,42 |
| X | JP 10-173629 A (NEC Corp.), 26 June, 1998 (26.06.98), Full text; all drawings & US 6067293 A | 1,3,7,9,13, 16,18,22,24, 28,30,34,36, 40 |

☒ Further documents are listed in the continuation of Box C.     ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 February, 2003 (14.02.03) | 04 March, 2003 (04.03.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP02/12208 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2000-252871 A  (Sony Corp.),<br>14 September, 2000 (14.09.00),<br>Full text; all drwings<br>& EP 1033827 A2          & KR 2000062657 A | 1,3,7,9,13,<br>16,18,22,24,<br>28,30,34,36,<br>40 |
| X | Akio AOYAMA et al., "Shitsunai/Yagai Jikken ni<br>yoru DS-CDMA System no Pass Search Tokusei",<br>The Institute of Electronics, Information and<br>Communication Engineers Gijutsu Kenkyu Hokoku<br>RCS97-164, 26 November, 1997 (26.11.97),<br>pages 51 to 58 | 1,3,7,9,13,<br>16,18,22,24,<br>28,30,34,36,<br>40 |

Form PCT/ISA/210 (continuation of second sheet) (July 1998)